# EUROPÄISCHE PATENTSCHRIFT

(11) **EP 4 106 979 B1**
(45) Veröffentlichungstag und Bekanntmachung des Hinweises auf die Patenterteilung: **07.05.2025**
(21) Anmeldenummer: 21706937.6
(22) Anmeldetag: 19.02.2021
(51) Int. Cl.: B29C 64/141, B29C 64/188, B33Y 10/00, B33Y 30/00, B29C 64/112, B29C 64/40, B29C 64/218

(54) **VERFAHREN ZUM HERSTELLEN EINES DREIDIMENSIONALEN FORMGEGENSTANDS MITTELS SCHICHTWEISEM MATERIALAUFTRAG**
METHOD OF PRODUCING A MOLDED THREE-DIMENSIONAL OBJECT BY MEANS OF A LAYER-BY-LAYER MATERIAL APPLICATION
PROCÉDÉ DE PRODUCTION D'UN OBJET TRIDIMENSIONNEL MOULÉ AU MOYEN D'UNE APPLICATION COUCHE PAR COUCHE DE MATÉRIAU

(30) Priorität: 19.02.2020 DE 102020001068
(43) Veröffentlichungstag der Anmeldung: 28.12.2022
(73) Patentinhaber: 3D Systems GmbH, 64546 Mörfelden-Walldorf (DE)
(72) Erfinder: MATHEA, Hans, 76344 Eggenstein-Leopoldshafen (DE)
(74) Vertreter: dompatent von Kreisler Selting Werner - Partnerschaft von Patent- und Rechtsanwälten mbB
(86) Internationale Anmeldenummer: PCT/EP2021/054222
(87) Internationale Veröffentlichungsnummer: WO 2021/165503

(56) Entgegenhaltungen:
- WO-A1-2015/105047

## Beschreibung

Die Erfindung betrifft ein Verfahren zum Herstellen eines dreidimensionalen Formgegenstands mittels schichtweisem Materialauftrag, wobei Geometriedaten für den Formgegenstand, ein Trägerteil mit einer Basisfläche zur Aufnahme des dreidimensionalen Formgegenstands, ein verfestigbares flüssiges, fließfähiges oder pulverförmiges erstes Material, ein pulverförmiges, vorzugsweise thermoplastische Pulverpartikel umfassendes zweites Material und ein Lösungsmittel bereitgestellt werden, in dem das verfestigte erste Material lösbar ist.

Bei einem derartigen, aus der Praxis bekannten Verfahren werden als erstes und zweites Material flüssige Polymere verwendet, die durch Einwirkung von ultravioletter Strahlung verfestigbar sind. Bei dem vorbekannten Verfahren wird auf die Basisfläche des Trägerteils zunächst eine erste Materialschicht aufgebracht, indem tröpfchenförmige Materialportionen des ersten und zweiten Materials mit Hilfe eines Tintenstrahldruckers auf unterschiedliche Stellen der Basisfläche aufgesprüht werden. Die Stellen an denen die aus den unterschiedlichen Materialien bestehenden Materialtröpfchen auf die Basisfläche aufgetragen werden, werden in Abhängigkeit von bereitgestellten Geometriedaten für den herzustellenden Formgegenstand derart gewählt, dass die aus dem zweiten Material bestehenden Bereiche der Materialschicht eine unterste Schicht des herzustellenden Formgegenstands bilden. Das erste Material dient als Stützmaterial, welches an Stellen auf die Basisfläche aufgebracht wird, an denen kein zweites Material aufgetragen wird und über denen der Formgegenstand nach dem Auftragen einer weiteren Materialschicht des zweiten Materials Überhänge aufweist, die bis zum Verfestigen aller Materialschichten durch das Stützmaterial unterstützt werden sollen. Danach wird die so erhaltene unterste Materialschicht wird in einem weiteren Schritt mit ultravioletter Strahlung bestrahlt, um in dem ersten und dem zweiten Material enthaltene Polymere durch Vernetzen zu verfestigen.

Nachdem die unterste Materialschicht fertiggestellt wurde, werden auf diese in entsprechender Weise weitere Materialschichten aufgebracht und verfestigt, bis alle Schichten des Formgegenstands hergestellt und verfestigt sind. Danach wird der so erhaltene Schichtstapel mit dem Lösungsmittel in Kontaktgebracht, bis sich das erste Material darin aufgelöst hat. Das zweite Material ist in dem Lösungsmittel nicht löslich.

Das vorbekannte Verfahren ermöglicht es zwar, dreidimensionale Formgegenstände als Prototypen oder in kleinen Stückzahlen vergleichsweise kostengünstig herzustellen. Durch die Verwendung UV vernetzbarer Polymere und die hohe Auflösung beim Drucken wird eine gute Oberflächenqualität ermöglicht. Für das hochaufgelöste 3D-Drucken ist jedoch eine sehr niedrige Viskosität der Polymere erforderlich, damit diese durch feine Düsen hindurch auf die Basisfläche bzw. eine darauf befindliche, verfestigte Materialschicht aufgetragen werden können.

Beim Tintenstrahldruckverfahren (InkJet-Verfahren) können die Düsen üblicherweise eine maximale Viskosität von 25 mPa·s verarbeiten. Höhere Viskositäten sind in der Regel nicht verjettbar. Die aus solchen Materialien erstellte Objekte sind nur minimal belastbar und können lediglich als Anschauungsobjekt dienen.

Aus der WO 2015/105047 A1 ist ein Verfahren zum Herstellen eines dreidimensionalen Formgegenstands bekannt, bei dem die einzelnen Materialschichten jeweils aus mindestens drei unterschiedlichen Materialien hergestellt werden. Beim Herstellen der einzelnen Materialschichten wird jeweils zunächst ein Tintenausstoßschritt durchgeführt, bei dem ein erstes und ein sich davon unterscheidendes zweites Material mittels Tintenstrahldruck auf eine Basisfläche bzw. eine darauf befindliche verfestigte Materialschicht aufgebracht werden. Das erste Material dient zum Herstellen einer in einem Lösungsmittel löslichen Opferschicht, welche darauf aufzubringende weitere Schichten stützen soll.

Das zweite Material wird für die Herstellung eines an die äußere Oberfläche des Formgegenstands angrenzenden Teilbereichs des Formgegenstands verwendet und ist in dem Lösungsmittel nicht löslich. Das zweite Material wird gemäß vorgegebener Geometriedaten derart auf eine Basisfläche bzw. eine darauf befindliche verfestigte Materialschicht aufgetragen, dass das zweite Material eine Kavität umgrenzt, die sich im inneren Volumen des herzustellenden Formgegenstands mit Abstand zu dessen Oberfläche befindet.

Nachdem das erste und das zweite Material auf die Basisfläche bzw. die darauf befindliche verfestigte Materialschicht aufgetragen wurden, wird ein Härtungsschritt durchgeführt, bei dem das erste und zweite Material verfestigt werden. Hierdurch werden eine Opferschicht und eine äußere Schicht des herzustellenden Formgegenstands erhalten.

Danach wird die Kavität mit einer Materialzusammensetzung befüllt, die ein wasserlösliches Harz und poröse Pulverpartikel enthält. Wenn sich die Materialzusammensetzung im festen Zustand befindet, wird sie vor dem Einfüllen in die Kavität durch Erhitzen in einen fließfähigen Zustand gebracht. Die Materialzusammensetzung kann mit Hilfe eines Rakels, durch Siebdruck oder durch Spin-Coating in die Kavität eingebracht werden. Die in die Kavität eingefüllte Materialzusammensetzung wird mit der Schicht des zweiten Materials planarisiert, um eine Materialschicht mit einheitlicher Dicke zu erhalten.

Danach wird eine Bindertinte, die ein härtbares Harz enthält und mit dem ersten Material übereinstimmen kann, zu der in der Kavität befindlichen Materialzusammensetzung dazugegeben. Dabei dringt die Bindertinte in die Poren der Pulverpartikel ein. Anschließend wird das Harz gehärtet. Hierbei wird eine gebundene Pulverschicht ausgebildet, bei der das gehärtete Harz in den Poren der Pulverpartikel verankert ist. Nach Angabe der Offenlegungsschrift wird hierdurch ein hohe mechanische Formbeständigkeit der gebundenen Pulverschicht ermöglicht. Außerdem wird die gebundene Pulverschicht durch das Harz mit der aus dem zweiten

Material bestehenden äußeren Schicht des herzustellenden Formgegenstands zu einer einheitlichen Schicht verbunden.

Bei dem vorbekannten Verfahren werden die vorstehend genannten Schritte wiederholt, um in entsprechender Weise weitere Materialschichten zu erzeugen. Nachdem sämtliche für den Formgegenstand benötigte Materialschichten fertiggestellt und verfestigt sind, wird das erste Material zum Entfernen der Opferschichten in dem Lösungsmittel aufgelöst.

Da die äußere Schicht des Formgegenstands durch Aufbringen von Materialtröpfchen im Tintenstrahldruckverfahren hergestellt und nur das Innere des Formgegenstands aus Pulver hergestellt wird, das gehärtet wird, ermöglicht das Verfahren gegenüber einem Verfahren, bei dem der gesamte Formgegenstand aus Pulverschichten hergestellt wird, die gehärtet werden, eine feinere Ausgestaltung der Oberflächengeometrie des Formgegenstands. Nach Angabe der Offenlegungsschrift soll durch das Verfahren außerdem eine exakte farbliche Gestaltung der Oberfläche des Formgegenstands ermöglicht werden.

Das Verfahren hat jedoch den Nachteil, dass es relativ aufwändig ist, weil für die Herstellung der äußeren Oberflächenschicht des Formgegenstands zusätzlich zu der das Pulver enthaltenden Materialzusammensetzung ein weiteres Material benötigt und strukturiert aufgetragen werden muss. Außerdem wird bei dem Verfahren ein Flüssighärter verwendet, der sich mit den Pulverpartikeln verbindet. Das innere Volumen des Formgegenstands besteht also aus verschiedenen Materialen, wodurch die mechanische Festigkeit des Formgegenstands geschwächt wird.

Zu erwähnen sind auch die mechanischen Eigenschaften des hergestellten Formgegenstands beim Einsatz dieses Verfahrens. Denn der Gegenstand ist nicht homogen aus einem starken Material, sondern besteht aus einer schwachen Schicht (UV vernetzbares Material) und einer stärkeren, das Pulver enthaltenden Schicht. Bei großen Formen sollte das nicht kritisch sein. Mit kleiner werdenden Teilen nimmt das Verhältnis Objekt zu Schutzschicht ab und damit auch deren Eigenschaften, wie die mechanische Stabilität. Ferner ist das Pulvermaterial kein reines Thermoplast, sondern besteht aus einer Mischung und dadurch nicht so belastbar wie ein reines Thermoplast.

Aus US 9 423 756 B2 ist ferner ein Verfahren zum Herstellen eines dreidimensionalen Formgegenstands mittels schichtweisem Materialauftrag bekannt, bei dem die einzelnen Materialschichten des herzustellenden Formgegenstands mit Hilfe einer elektrophotographischen Druckvorrichtung auf eine Basisfläche einer Trägerwalze und/oder eine auf der Basisfläche befindliche verfestigte Materialschicht aufgebracht werden kann. Die Druckvorrichtung hat eine fotoempfindliche Bildwalze, die mittels eines Motors um ihre Walzenachse in eine erste und eine zweite Drehrichtung drehbar ist. Die Bildwalze hat einen Walzenkörper, der an seiner Mantelfläche mit einer lichtempfindlichen Beschichtung beschichtet ist, die nachstehend auch als aktive Schicht bezeichnet wird. Die aktive Schicht besteht aus einem Material, das im Dunkeln elektrisch isolierend und bei Lichteinfall elektrisch leitend ist.

Zum Übertragen eines Bilds auf die aktive Schicht wirkt die Bildwalze mit einer ersten und einer zweiten Ladungserzeugungseinrichtung zum elektrischen Laden der aktiven Schicht, einem Bildwandler, einer ersten und zweiten elektrostatischen und magnetischen Entwicklungsstation sowie einer ersten und einer zweiten Reinigungseirichtung zusammen. Die erste Entwicklungsstation beinhaltet ein erstes pulverförmiges Material, das zum Herstellen einer Stützschicht dient, die in einem Lösungsmittel lösbar ist und nach dem Herstellen des Formgegenstands in dem Lösungsmittel gelöst wird. Die zweite Entwicklungsstation beinhaltet ein zweites Pulverpartikel enthaltendes Material, das zum Herstellen einer Formgegenstands-schicht dient, die in dem Lösungsmittel nicht löslich ist.

Die Ladungserzeugungseinrichtungen, der Bildwandler, die Entwicklungsstationen und die Reinigungseinrichtungen sind derart am Umfang der Bildwalze positioniert, dass sich die Mantelfläche der aktiven Schicht bei Drehung der Bildwalze in die erste Drehrichtung zum Beschichten der aktiven Schicht mit dem ersten pulverförmigen Material von der ersten Ladungserzeugungseinrichtung zum Bildwandler, von diesem zur ersten Entwicklungsstation und dann zur zweiten Reinigungseinrichtung bewegt. Wird die Bildwalze in die entgegengesetzte zweite Drehrichtung gedreht, bewegt sich die Mantelfläche der aktiven Schicht zum Beschichten der aktiven Schicht mit dem zweiten Material von der zweiten Ladungserzeugungseinrichtung zum Bildwandler, von diesem zur zweiten Entwicklungsstation und dann zur ersten Reinigungseinrichtung.

Mittels der Ladungserzeugungseinrichtung werden zunächst bei Dunkelheit auf der aktiven Schicht ganzflächig und gleichmäßig elektrische Ladungen erzeugt. Danach wird die aktive Schicht mit Hilfe des Bildwandlers in Abhängigkeit von in einem Speicher abgelegten Geometriedaten für den Formgegenstand selektiv pixelweise mit elektromagnetischer Strahlung belichtet. An den belichteten Stellen wird die aktive Schicht elektrisch leitend, wodurch die dort befindlichen Ladungen in den Walzenkörper abgeleitet werden und somit die aktive Schicht elektrisch strukturiert wird.

**In** Drehrichtung der Bildwalze hinter dem Bildwandler wird die Oberfläche der aktiven Schicht derart an der ersten bzw. zweiten Entwicklungsstation vorbeibewegt, dass die aktive Schicht entsprechend der zuvor an ihrer Oberfläche erzeugten Ladungsverteilung mit dem pulverförmigen Material der entsprechenden Entwicklungsstation beschichtet wird. Das pulverförmige Material wird in der Entwicklungsstation derart triboelektrisch auf ein vom elektrischen Potential der aktiven Schicht abweichendes elektrisches Potential geladen, dass die aktive Schicht in Abhängigkeit von ihrem jeweiligen Potential selektiv mit pulverförmigem Material beschichtet wird.

Nachdem die fotoempfindliche Bildwalze jeweils selektiv mit dem ersten und zweiten Material beschichtet wurde, wird die auf die aktive Schicht aufgetragene Beschichtung von der aktiven Schicht auf die Mantelfläche einer Transferwalze übertragen, die mittels eines weiteren Motors synchron zur Bildwalze entgegengesetzt zur Drehrichtung der Bildwalze angetrieben wird. Auch hier geschieht die Übertragung des pulverförmigen ersten bzw. zweiten Materials das durch einen Ladungsunterschied zwischen dem Material und der Mantelfläche der Transferwalze. Wenn die Synchronisation von Bildwalze und Transferwalze nicht mit großer Präzision vorgenommen wird, geht die absolute Positionierung verloren. Bei einem Aufbau mit tausenden von Schichten erzeugt das eine sehr unregelmäßige Kontur des Formgegenstands und die optische Homogenität wird verschlechtert.

Schließlich wird das pulverförmige Material von der Mantelfläche der Transferwalze auf die Basisfläche bzw. eine darauf befindliche oberste verfestigte Materialschicht transferiert und danach durch Wärmeeinwirkung fixiert. Die Positionierungsgenauigkeit jeder dieser Schichten ist sehr kritisch, denn die präzise auf der Bildwalze selektiv erzeugte Schicht wird nicht direkt über die vorhergehende Schicht aufgetragen, sondern muss zuerst auf eine Transferwalze übertragen werden und dann erst auf die bestehende Schicht. Die Synchronisation dieser mechanischen Komponenten, die Dehnungen und Temperaturunterschieden ausgesetzt sind, ist nicht präzise genug. Außerdem unterliegen sie Verschleiß, der mit der Zeit zur schlechteren Genauigkeit der aufeinander gelegten Schichten führt.

Die vorstehend genannten Schritte werden wiederholt, bis sämtliche Materialschichten des Formgegenstands übereinander geschichtet sind. Danach wird die so erhaltene Schichtanordnung zum Entfernen des als Stützmaterial dienenden ersten Materials in dem Lösungsmittel gelöst.

Für die Durchführung des vorbekannten Verfahrens werden folgende Komponenten benötigt:
- Eine teure und verschleißbehaftete, daher kurzlebige fotosensitive Bildwalze,
- einen teuren Bildwandler, i.d.R. Laser-Scanner, oder LED-Scanner,
- aufwändige und verschleißbehaftete, daher kurzlebige Ladungserzeugungseinrichtungen, jeweils mit Lade- / Entladekoronas zum elektrischen Laden der aktive Schicht,
- teure und verschleißbehaftete, daher kurzlebige Entwickler-Einheiten.

All diese Komponenten sind Verbrauchsmaterialien, die eine relativ geringe Lebensdauer aufweisen und oft gewechselt werden müssen. Insbesondere unterliegt die Bildwalze dem Verschleiß ihrer fotosensitiven Schicht. Die Beschaffenheit der pulverförmigen Materialien ist ebenfalls sehr komplex, denn sie müssen viele Komponenten beinhalten, um sie ladungsmäßig steuerbar zu machen, wie das Baumaterial für den Formgegenstand, Additive zur Verbesserung der Fließfähigkeit und Additive zur Verbesserung der elektrischen Aufladbarkeit des zweiten Materials. Die magnetische Trägerpartikel müssen exakt an die Toner-Sorte angepasst sein und die Herstellung eines funktionierenden Toners samt Trägerpartikeln ist aufwändig.

Außerdem hat das vorbekannte Verfahren den Nachteil, dass bei Formgegenständen, bei denen eine große Anzahl von Materialschichten übereinander gedruckt werden, die Maßhaltigkeit des gedruckten Formgegenstands nur schwer eingehalten werden kann, weil Schichtdickentoleranzen der Materialschicht auftreten können.

Aufgabe der Erfindung ist es daher, ein Verfahren der eingangs genannten Art zu schaffen, das auf einfache und kostengünstige Weise mittels schichtweisem Materialauftrag eine formgenaue und sehr präzise Herstellung eines eine hohe mechanische Stabilität und Festigkeit aufweisenden Formgegenstands ermöglicht. Insbesondere soll das Verfahren auch eine hohe Oberflächengenauigkeit des Formgegenstands und einen langzeitstabilen Formgegenstand ermöglichen.

Diese Aufgabe wird mit den Merkmalen des Patentanspruchs 1 gelöst.

Erfindungsgemäß ist also ein Hybridverfahren vorgesehen, bei dem Materialien mit unterschiedlichen Eigenschaften mittels unterschiedlicher Druck-Verfahren verarbeitet und auf die Basisfläche bzw. eine darauf befindliche, verfestigte Materialschicht des dreidimensionalen Formgegenstands schichtweise aufgetragen werden.

Besonders hervorzuheben ist die Präzision beim Aufbau der Schichten des ersten wie auch des zweiten Materials. So wird sowohl die Negativform per InkJet als auch das Pulver per Beschichtungswalze ohne Zwischenträger positioniert. Dies ermöglicht eine hundertprozentige Kontrolle der Formen in jede Richtung.

Das erste Material kann sehr niedrigviskos bzw. dünnflüssig oder hochfließfähig sein, weil es lediglich zur Herstellung einer Negativform für das zweite Material dient. Durch die niedrige Viskosität bzw. die hohe Fließfähigkeit, die das erste Material während des Auftragens auf die Basisfläche bzw. eine darauf befindliche, bereits verfestigte Materialschicht aufweist, kann die Form mittels eines digitalen Druckverfahrens mit hoher Auflösung und Oberflächenqualität gedruckt werden, indem eine Vielzahl entsprechend kleiner Materialportionen des ersten Materials auf die Basisfläche bzw. die darauf befindliche, verfestigte Materialschicht des dreidimensionalen Formgegenstands aufgetragen wird.

An die mechanische Stabilität und Festigkeit der aus dem ersten Material bestehenden Materialschicht der Negativform werden nur geringe Anforderungen gestellt, da die Negativform lediglich das zweite Material tragen und eventuelle, bei dem zum Auftragen des zweiten Materials vorgesehenen Druckverfahren auf das erste Material ausgeübten Kräfte abstützen muss. Durch die Verfestigung des ersten Materials erreicht dieses eine ausreichende Festigkeit, um als Formgeber für
das zweite Material dienen zu können. Die mechanische Festigkeit des im verfestigten Zustand befindlichen ersten Materials hat keinen Einfluss auf die mechanische Stabilität des aus den verfestigten Schichten des zweiten Materials gebildeten Formgegenstands, weil das verfestigte erste Material nach Auftragen aller Materialschichten durch Auflösen in dem Lösungsmittel von dem Formgegenstand entfernt wird. Das verfestigte zweite Material ist in dem Lösungsmittel unlösbar.

Das pulverförmige zweite Material ist das eigentliche Baumaterial für den Formgegenstand und kann andere Eigenschaften, vor allem im verfestigten Zustand eine höhere Festigkeit aufweisen als das erste Material. Unter thermoplastischen Pulverpartikeln werden pulverförmige Partikel verstanden, die durch Energiezufuhr verflüssigbar sind.

Da das zweite Material durch Abformen der aus dem ersten Material präzise hergestellten, zuvor verfestigten Negativform geometrisch geformt wird, kann das pulverförmige zweite Material auf einfache Weise vollflächig bzw. nicht selektiv auf die Trägeroberfläche des Partikelträgers aufgebracht werden. Danach wird der Partikelträger derart an der Kavität der Negativformschicht positioniert, dass das pulverförmige zweite Material von der Trägeroberfläche in die Kavität übertragen wird und diese vollflächig und vollständig ausfüllt. Da das zweite Material vollflächig, also nicht selektiv auf den Partikelträger aufgetragen wird, müssen beim Positionieren des Partikelträgers an der Kavität keine auf der Trägeroberfläche befindlichen strukturierten Bereiche des zweiten Materials relativ zur Kavität positioniert werden. Dies ermöglicht eine einfache Durchführung des Verfahrens. Beim Abformen der verfestigten Negativform wird mindestens eine quer zu den Ebenen, in denen sich die Materialschichten des Formgegenstands erstrecken, angeordnete Begrenzungsfläche der Negativform auf das zweite Material abgeformt bzw. auf dieses übertragen.

Der durch die Basisfläche oder die darauf befindliche verfestigte Materialschicht gebildete Boden der Kavität kann mittels einer Ladekorona und/oder einer Aufladungsplatte auf das elektrische bzw. elektrostatische Potential der ersten Polarität geladen werden. Die Aufladungsplatte wird bevorzugt direkt unter der Basisfläche parallel zu dieser angeordnet, wobei zwischen der Basisfläche und der Aufladungsplatte eine Isolierschicht vorgesehen wird.

Weil die einzelnen Formgegenstands-Schichten jeweils nach ihrem Auftragen auf die Basisfläche bzw. eine darauf befindliche verfestigte Materialschicht durch Wärmeeinwirkung gesintert werden, kann der Formkörper aus einem einheitlichen Material hergestellt werden. Beim Sintern verschmelzen die in dem pulverförmigen zweiten Material enthaltenen Pulverpartikel miteinander, wodurch ein einstückiger Formgegenstand gebildet wird. Durch das Sintern wird die mindestens eine, quer zu den Ebenen, in denen sich die Materialschichten des Formgegenstands erstrecken, angeordnete Begrenzungsfläche der verfestigten Negativform sehr präzise auf die Formgegenstandsschicht abgeformt. Dadurch ist es sogar möglich, dreidimensionale Formkörper mit einer glatten oder eine Textur aufweisenden mechanisch stabilen Oberfläche herzustellen. Durch das Verfestigen des zweiten Materials mittels Sintern wird außerdem ein langzeitstabiler Formgegenstand ermöglicht. Als thermoplastische Pulverpartikel werden teilkristalline und bevorzugt amorphe thermoplastische Pulverpartikel verwendet. Die amorphen Pulverpartikel haben beim Sintern ein meistens kleineres Schrumpfverhalten als kristalline Pulverpartikel. Amorphe Pulverpartikel können im Inneren eines Druckers bei Raumtemperatur verarbeitet werden, d.h., dass das zweite Material bzw. das Baumaterial nicht auf eine Temperatur gebracht werden muss, die dicht unter dem Schmelzpunkt liegt.

Beim Sintern wird das zweite Material bevorzugt mit einer Wärmestrahlung bestrahlt, die vorzugsweise mit Hilfe mindestens einer Blitzlampe erzeugt wird. Es können auch andere Energie-Lieferanten eingesetzt werden, welche die Energie sehr schnell liefern können. Beim Einsatz der Blitzlampe wird das zweite Material schnell auf die für das Sintern erforderliche Temperatur erhitzt. Nach Erlöschen des Blitzes kühlt sich das Material schnell wieder ab. Hierdurch wird ein ausreichend hoher Energieeintrag in die oberste Materialschicht und die darunterliegende Materialschicht garantiert, ohne dass der Formgegenstand bzw. die die Basisfläche unnötig aufgeheizt wird, aber die zwei letzten Schichten sich miteinander thermisch verbinden.

Das erste und das zweite Material werden vorzugsweise derart ausgewählt, dass das zweite Material die bei der Wärmebehandlung erzeugte Wärmestrahlung stärker absorbiert als das erste Material. Das kann dadurch erreicht werden, dass das zweite Material aus einem mehr absorbierendem z.B. dunkleren Werkstoff besteht als das erste Material. Insbesondere kann das zweite Material schwarz und das erste Material weiß oder transparent sein. Hierdurch reduziert sich bei der Wärmebehandlung des zweiten Materials die thermische Belastung des ersten Materials.

Da bei dem erfindungsgemäßen Verfahren vorzugsweise nach dem Drucken jeder einzelnen Materialschicht jeweils über eine in einem vorbestimmten Abstand zur Basisfläche, vorzugsweise parallel zu dieser angeordnete Ebene überstehende Bereiche der verfestigten Negativform-Schicht und/oder der verfestigten Formgegenstands-Schicht zum Herstellen einer planen Oberfläche durch Materialabtrag entfernt werden, verlaufen die einzelnen Schichten des Formgegenstands exakt parallel bzw. sind in einer vorbestimmten Anordnung zueinander angeordnet und weisen eine vorbestimmte Schichtdicke auf. Außerdem werden durch den Materialabtrag "Verschmutzungen", die beim Befüllen der Kavitäten mit dem zweiten Material an der Oberfläche der obersten verfestigten Schicht des ersten Materials auftreten können, wenn das zweite Material mit dieser Oberfläche in Berührung gerät, entfernt. Das Abtragen der über die Ebene überstehenden Bereiche sorgt also dafür, dass die aus dem verfestigten ersten und zweiten Material bestehende Mixschicht immer die gewünschte Dicke aufweist und an der Oberfläche des ersten Materials frei von in dem Lösungsmittel unlösbarem zweitem Material ist. Dies ermöglicht eine sehr genaue und verzerrungsarme Herstellung des Formgegenstands, auch wenn der Formgegenstand mehrere tausend Materialschichten aufweist.

Bei einer bevorzugten Ausgestaltung der Erfindung werden die Materialportionen des ersten Materials mittels eines Materialauftragungs-Druckverfahrens, vorzugsweise Tintenstrahl-Druckverfahrens auf die Basisfläche und/oder die darauf befindliche verfestigte Negativform-Schicht und/oder eine verfestigte Formgegenstands-Schicht aufgebracht, wobei das erste Material ein durch Einwirkung von Energie verfestigbares Material ist, das zum Verfestigen der Negativform-Schicht mit der Energie beaufschlagt wird. Die Energie kann dabei eine elektromagnetische Strahlung, insbesondere ultraviolette Strahlung sein, durch welche ein in dem ersten Material enthaltenes Polymer und/oder Copolymer durch Quervernetzen verfestigt wird. **In** diesem Fall enthält das erste Material bevorzugt einen Fotoinitiator. Es ist aber auch möglich, das erste Material durch Bestrahlen mit einem Elektronenstrahl zu verfestigen. Außerdem kann das erste Material auch mittels eines Elektrofotographieverfahrens selektiv auf die Basisfläche und/oder eine darauf befindliche verfestigte Materialschicht aufgebracht werden.

Bei einer zweckmäßigen Ausgestaltung der Erfindung hat erste Material eine zum Tintenstrahl-Drucken geeignete Arbeits-Viskosität hat, die geringer als 1000 mPa·s, insbesondere geringer als 100 mPa·s, gegebenenfalls geringer als 30 mPa·s und bevorzugt geringer als 20 mPa·s hat und in Form von Flüssigkeitströpfchen mit einer Auflösung von mindestens 180 dpi, insbesondere mindestens 360 dpi und bevorzugt mindestens 720 dpi oder 1440 dpi auf die Basisfläche und/oder die darauf befindliche verfestigte Materialschicht des dreidimensionalen Formgegenstands aufgebracht wird. Dies ermöglicht eine hohe Oberflächenqualität der Negativform und somit des Formgegenstands.

Als vorteilhaft hat sich erwiesen, wenn die über die in Schritt g) von Patentanspruch 1 genannte Ebene überstehende Bereiche der verfestigten Negativform-Schicht und/oder der verfestigten Formgegenstandsschicht durch span- oder partikelabhebenden Materialabtrag entfernt werden, insbesondere durch Fräsen, Schleifen, Lasern und Reinigen und/oder Polieren. Dies ermöglicht beim Nivellieren der einzelnen Materialschichten jeweils einen schnellen Arbeitsfortschritt und die Herstellung einer exakt plan und parallel zur Basisfläche angeordneten Materialschichtoberfläche.

Bei einer bevorzugten Ausführungsform der Erfindung werden die Pulverpartikel in Schritt d) des Patentanspruchs 1 triboelektrisch geladen. Hierzu werden die Pulverpartikel mit einem Werkstoff (Carrier) in Kontakt gebracht, der eine höhere Haltekraft hat als die Pulverpartikel und danach werden die Pulverpartikel von dem Werkstoff durch einen Potentialunterschied getrennt. Bevorzugt werden die Pulverpartikel durch Mischen in einem Behälter an dem Werkstoff gerieben, damit sich die Pulverpartikel triboelektrisch aufladen.

Zweckmäßigerweise hat der Partikelträger eine elektrisch leitfähige Schicht mit einer darauf befindlichen Isolierschicht, wobei an die elektrisch leitfähige Schicht derart ein elektrisches Potential der ersten Polarität angelegt wird, dass an der Trägeroberfläche befindliche Partikel durch die Isolierschicht hindurch elektrostatisch an diese angezogen werden. Die Isolierschicht besteht bevorzugt aus Keramik oder aus einem anderen abrasionsresistenten Material. Die Isolierschicht ermöglicht eine hohe Lebensdauer und einen geringen Verschleiß des Partikelträgers beim Drucken. Die Oberfläche des Partikelträgers kann aus einem Werkstoff bestehen, der nicht fotosensitiv ist, d.h. die elektrischen Eigenschaften der Oberfläche sind unabhängig davon, ob sie sich im Dunklen befindet oder einer Bestrahlung mit elektromagnetischer Strahlung, wie Licht, ausgesetzt ist. Dies ermöglicht eine einfache Durchführung des Verfahrens.

Bei einer anderen Ausführungsform der Erfindung weist der Partikelträger eine elektrisch leitfähige Schicht mit einer darauf befindlichen aktiven Schicht auf, deren elektrische Leitfähigkeit durch Belichten mit optischer Strahlung veränderbar ist, wobei die aktive Schicht selektiv mittels eines Elektrophotographieverfahrens mit einem elektrischen Potential strukturiert wird, wobei die aktive Schicht danach derart mit den Pulverpartikeln des zweiten Materials in Kontakt gebracht wird, dass diese in Abhängigkeit von der Strukturierung der aktiven Schicht mit dem elektrischen Potential an der aktiven Schicht anhaften, und wobei die so mit den Pulverpartikeln strukturierte aktive Schicht an der Kavität positioniert wird, um die Pulverpartikel in die Kavität zu übertragen. Die Oberfläche des Partikelträgers kann also auch elektrophotographisch strukturiert mit den Pulverpartikeln beschichtet werden. Hierdurch kann die Menge des nach dem Befüllen der Kavität der Negativschicht auf dem Partikelträger verbleibenden restlichen Pulverpartikel reduziert werden.

Bevorzugt werden die Pulverpartikel in Schritt d) des Patentanspruchs 1 mit Hilfe einer triboelektrischen Aufladeeinrichtung geladen, die ein mit den Pulverpartikeln befülltes Reservoir und ein mit den Pulverpartikeln in Kontakt stehendes Rührwerkzeug aufweist, das derart ausgestaltet ist und relativ zu den Pulverpartikeln bewegt wird, dass diese elektrisch geladen werden. Die Pulverpartikel können dadurch auf einfache Weise geladen werden.

Bei einer zweckmäßigen Ausgestaltung der Erfindung wird als Partikelträger eine Beschichtungswalze verwendet, deren Mantelfläche als Trägeroberfläche für die Pulverpartikel dient, wobei die Mantelfläche an einer ersten Stelle mit den das Potential der zweiten Polarität aufweisenden Pulverpartikeln in Kontakt gebracht und die Beschichtungswalze zum flächigen Beschichten der Mantelfläche mit den Pulverpartikeln um die Walzenachse der Beschichtungswalze relativ zur ersten Stelle gedreht wird, und wobei die Mantelfläche an einer mit den Pulverpartikeln beschichteten zweiten Stelle, welche in Umfangsrichtung der Mantelfläche zur ersten Stelle versetzt ist, der Kavität zugewandt und derart dicht relativ zur Kavität positioniert wird, dass die Pulverpartikel zur Bildung der Formgegenstands-Schicht von der Mantelfläche in die Kavität übertragen werden. Mit einer solchen Beschichtungswalze kann das an der Oberfläche der Beschichtungswalze befindliche pulverförmige Material direkt, kontinuierlich und mit großer Präzision auf die Basisfläche bzw. eine darauf befindliche verfestigte Materialschicht aufgetragen werden. Durch das Fehlen von Zwischenträgern ist die höchste Positionierungs-Präzision erreichbar.

Vorteilhaft ist, wenn Pulverpartikel, die an einem Abschnitt der Mantelfläche der Beschichtungswalze anhaften, der in Rotationsrichtung hinter der zweiten Stelle und vor der ersten Stelle liegt, von der Mantelfläche entfernt und in das Reservoir zurücktransportiert werden. Die Mantelfläche der Beschichtungswalze wird also nach dem Passieren der zweiten Stelle bzw. nach dem Vorbeibewegen an der Kavität gereinigt, bevor sie erneut an der ersten Stelle positioniert wird. Durch die Reinigung der Mantelfläche wird einem Ansammeln von in den Pulverpartikeln enthaltenen und/oder auf diese als Beschichtung aufgebrachten Ladungstrennstoffen an der Mantelfläche entgegengewirkt.

Bei einer Ausführungsform der Erfindung wird als Beschichtungswalze eine zylindrische Walze verwendet, wobei das die Basisfläche aufweisende Trägerteil
i) zum Auftragen einer ersten Materialschicht, ausgehend von einer Ausgangslage in eine Vorwärtstransportrichtung relativ zur Beschichtungswalze verschoben wird,
ii) danach relativ zur Beschichtungswalze zurück in die Ausgangslage zurückbewegt,
iii) dann zum Auftragen einer zweiten Materialschicht erneut relativ zur Beschichtungswalze in die Vorwärtstransportrichtung verschoben wird,
und wobei das Trägerteil während und/oder zwischen den Schritten i) bis iii) relativ zur Beschichtungswalze abgesenkt wird. Die Basisfläche wird also während des schichtweisen Herstellens des Formgegenstands relativ zur Zylinderachse der zylindrischen Mantelfläche der Beschichtungswalze hin- und herbewegt, beispielsweise zwischen zwei Endlagen. Diese Ausführungsform des Verfahrens wird vorzugsweise verwendet, wenn die Geometriedaten für den Formgegenstand in einem kartesischen Koordinatensystem vorliegen.

Bei einer Weiterbildung der Erfindung wird das die Basisfläche aufweisende Trägerteil während des Materialauftrags und gegebenenfalls während des Verfestigens der Materialien um eine quer zur Zylinderachse der Beschichtungswalze angeordnete Rotationsachse relativ zur Beschichtungswalze gedreht und gegebenenfalls während der Drehbewegung relativ zur Beschichtungswalze abgesenkt, wobei die Beschichtungswalze als konische Walze ausgestaltet wird, deren Walzenquerschnitt, ausgehend von ihrem von der Rotationsachse entfernten Ende zu ihrem näher an der Rotationsachse angeordneten anderen Ende abnimmt. Diese Ausgestaltung hat den Vorteil, dass die Basisfläche während des gesamten Herstellungsprozesses des Formgegenstands kontinuierlich um die Rotationsachse gedreht werden kann, was ein unterbrechungsfreies Drucken ermöglicht. Im Vergleich zu einem Verfahren, bei dem die Basisfläche während des Druckens zwischen zwei Endlagen hin- und herbewegt wird, wird durch die Rotationsbewegung der Basisfläche ein schnellerer Druckfortschritt und ein geringerer Verschleiß an dem für die Durchführung des Verfahrens verwendeten 3D-Drucker ermöglicht.

Bei dem aus US 9 423 756 B2 bekannten Verfahren, bei dem die Beschichtungswalze als Bildwalze mit einer fotoempfindlichen Schicht ausgestaltet ist, wäre eine konische Ausgestaltung der Bildwalze nicht sinnvoll, weil Probleme mit der elektrischen Aufladung der Mantelfläche auftreten würden. Der Walzenumfang muss entlang der Corona einen konstanten Durchmesser haben, um ein homogenes Potential auf der Mantelfläche der Bildwalze zu erreichen. Des Weiteren würde sich auch die Ausbildung der Entwickler-Einheit verkomplizieren, weil die Umfangsgeschwindigkeiten einer handelsüblichen Entwicklereinheit am Anfang und Ende der Magnetwalze unterschiedlich wären. Auch das Entladen der Fotoschicht der Bildwalze per Laser-/Leuchtdiodenstrahl würde mit unterschiedlicher Energie an den Enden der Walze geschehen - was eine unterschiedlich starke Tonerschicht bedeuten würde.

Somit ist das aus der US 9 423 756 B2 bekannte Verfahren ausschließlich in einem kartesischen Koordinatensystem anwendbar.

Bei einer vorteilhaften Ausgestaltung der Erfindung wird eine Zuführwalze für die Pulverpartikel bereitgestellt, die mit ihrer Mantelfläche durch einen Walzenspalt, in dem der Carrier mit angehafteten den Pulverpartikeln die Mantelfläche der Beschichtungswalze berühren, von der Mantelfläche der Beschichtungswalze beabstandet ist, wobei die Zuführwalze eine an ihrer Mantelfläche eine elektrisch leitfähige Zuführwalzenschicht mit einer darauf befindlichen Isolierungsschicht aufweist, wobei an die Zuführwalzenschicht derart ein elektrisches Potential der zweiten Polarität angelegt wird, dass an der Mantelfläche der Zuführwalze befindliche Partikel elektrostatisch an diese angezogen werden, wobei die Mantelfläche der Zuführwalze an einer vom Walzenspalt beabstandeten Stelle mit den Pulverpartikeln in Kontakt gebracht und die Zuführwalze derart um ihre Achse gedreht wird, dass auf der Mantelfläche der Zuführwalze befindliche Pulverpartikel an die Mantelfläche der Beschichtungswalze gelangen, und wobei das an die Zuführwalzenschicht angelegte Potential und das an das an die elektrisch leitfähige Schicht der Beschichtungswalze angelegte Potential derart gewählt werden, dass die Pulverpartikel in dem Walzenspalt von der Mantelfläche der Zuführwalze auf die Mantelfläche der Beschichtungswalze übertragen werden. Hierdurch kann das pulverförmige zweite Material mit definierter Schichtdicke auf die Mantelfläche der Beschichtungswalze übertragen werden.

Bei einer bevorzugten Ausführungsform der Erfindung ist vorgesehen, dass magnetisch leitfähige und vorzugsweise triboelektrisch aufladbare Trägerpartikel bereitgestellt und derart mit den Pulverpartikeln des zweiten Materials in Kontakt gebracht werden, dass die Pulverpartikel an den Trägerpartikeln lösbar haften bleiben, dass eine magnetische Zuführwalze für die Pulverpartikel bereitgestellt wird, die mit ihrer Mantelfläche durch einen Walzenspalt von der Mantelfläche der Beschichtungswalze beabstandet ist, dass die magnetischen Trägerpartikel mit den daran anhaftenden Pulverpartikeln an einer vom Walzenspalt beabstandeten Stelle derart mit der Mantelfläche der Zuführwalze in Kontakt gebracht werden, dass die Trägerpartikel magnetisch an der Mantelfläche der Zuführwalze haften bleiben, dass die Zuführwalze derart um ihre Achse gedreht wird, dass auf der Mantelfläche der Zuführwalze befindliche Trägerpartikel mit den daran anhaftenden Pulverpartikeln zunächst zum Absteifen von mit Pulverpartikeln beschichteten Trägerpartikeln an einer Abstreifeinrichtung vorbeibewegt werden und nach Durchlaufen der Abstreifeinrichtung in den Walzenspalt gelangen, und dass das Potential der Beschichtungswalze derart abweichend von dem Potential der an den Trägerpartikeln anhaftenden Pulverpartikel gewählt wird, dass die Pulverpartikel in dem Walzenspalt von den Trägerpartikeln abgelöst und auf die Mantelfläche der Beschichtungswalze übertragen werden. Dabei ermöglichen die magnetisch leitfähigen Trägerpartikel in Kombination mit der magnetischen Zuführwalze ein gleichmäßiges Auftragen des pulverförmigen zweiten Materials auf die Beschichtungswalze mit definierter Schichtdicke. Nachdem die Pulverpartikel in dem Walzenspalt von den Trägerpartikeln abgelöst wurden, können die Trägerpartikeln erneut mit Pulverpartikeln beschichtet und dann wiederverwendet werden. Die Pulverpartikel haften bevorzugt über elektrostatische Kräfte an den Trägerpartikeln an.

Bei einer anderen bevorzugten Ausgestaltung des Verfahrens werden magnetisch leitfähige Trägerpartikel bereitgestellt und derart mit den Pulverpartikeln des zweiten Materials in Kontakt gebracht, dass die Pulverpartikel an den Trägerpartikeln lösbar haften bleiben, dass eine Beschichtungswalze mit einer magnetischen Mantelfläche bereitgestellt wird, die durch einen Übertragungsspalt vom Boden der mit den Pulverpartikeln zu befüllenden Kavität beabstandet ist, dass die magnetischen Trägerpartikel mit den daran anhaftenden Pulverpartikeln an einer von der Kavität beabstandeten Stelle derart mit der Mantelfläche der Beschichtungswalze in Kontakt gebracht werden, dass die Trägerpartikel magnetisch an der Mantelfläche der Beschichtungswalze haften bleiben, dass die Beschichtungswalze derart um ihre Achse gedreht wird, dass auf der Mantelfläche der Beschichtungswalze befindliche Trägerpartikel mit den daran anhaftenden Pulverpartikeln zunächst zum Absteifen von mit Pulverpartikeln beschichteten Trägerpartikeln an einer Abstreifeinrichtung vorbeibewegt werden und nach Durchlaufen der Abstreifeinrichtung in den Übertragungsspalt gelangen, und dass das Potential des Bodens der Kavität derart abweichend von dem Potential der an den Trägerpartikeln anhaftenden Pulverpartikel gewählt wird, dass die Pulverpartikel in dem Übertragungsspalt von den Trägerpartikeln abgelöst und auf den Boden der Kavität übertragen werden. Die Pulverpartikel können also auch direkt vom von der Magnetwalze des Entwicklers in die Kavität der Negativform übertragen werden. Hierdurch entfallen eine zusätzliche Beschichtungswalze und die Rückführung der Pulverpartikel zum Pulverpartikel-Reservoir, so dass das Verfahren auf einfache Weise durchgeführt werden kann.

Bei einer Weiterbildung der Erfindung wird als erstes Material ein elektrisch leitfähiges Material und als zweites Material ein elektrisch isolierendes Material verwendet, wobei zumindest die am nächsten zur Trägeroberfläche des Partikelträgers angeordnete, verfestigte Negativform-Schicht auf ein elektrisches Potential gelegt wird, das sich derart vom Potential des elektrisch leitfähigen Bereichs des Partikelträgers und vom elektrischen Potential der auf dem Partikelträger befindlichen Pulverpartikel des zweiten Materials unterscheidet, dass beim Positionieren dieser Negativform-Schicht an der Trägeroberfläche des Partikelträgers weniger, insbesondere 50% weniger, gegebenenfalls 70% weniger und bevorzugt 90% weniger Pulverpartikel pro Flächeneinheit auf die Negativform-Schicht übertragen werden als pro Flächeneinheit in mindestens eine Kavität dieser Negativform-Schicht übertragen werden, wenn die Kavität an der Trägeroberfläche des Partikelträgers positioniert wird. Die Potentiale des elektrisch leitfähigen Bereichs des Partikelträgers, der Negativform-Schicht und der Pulverpartikel sind also derart unterschiedlich gewählt, dass das pulverförmige zweite Material von der Trägeroberfläche des Partikelträgers im Wesentlichen nur in die Kavität übertragen wird, nicht aber auf die Oberfläche der obersten Negativform-Schicht. Das nicht von der flächig mit den Pulverpartikeln beschichteten Trägeroberfläche des Partikelträgers bzw. der Beschichtungswalze auf die Negativform-Schicht abgegebene Material kann dann gegebenenfalls zum Beschichten weiterer Formgegenstands-Schichten verwendet werden. Hierdurch reduziert sich die für die Herstellung des Formkörpers benötigte Menge des zweiten Materials entsprechend.

Bei einer Weiterbildung der Erfindung umfasst das pulverförmige zweites Material einen Fotoinitiator, wobei die thermoplastischen Pulverpartikel ein Polymer und/oder Copolymer aufweisen, und wobei der Fotoinitiator nach dem Sintern zum Vernetzen des Polymers durch Bestrahlung mit elektromagnetischer Strahlung aktiviert wird. In vorteilhafter Weise kann mit diesem Verfahren aus thermoplastischen Partikeln ein Duroplast hergestellt werden. Dadurch erhöht sich die Temperaturbeständigkeit des zweiten Materials. Bei reinen Thermoplasten ist die Temperaturbeständigkeit dagegen problematisch.

Bei einer besonders vorteilhaften Ausgestaltung der Erfindung weist das Trägerteil an der Basisfläche mindestens zwei, in der Aufsicht auf die Basisfläche seitlich zueinander versetzte, vorzugsweise kammartig ineinandergreifende Elektroden auf, wobei an die Elektroden derart eine elektrische Spannung angelegt wird, dass am Boden der Kavität das die erste Polarität aufweisende elektrische Potential auftritt. Hierdurch können die Pulverpartikel des zweiten Materials an der Kavität besonders gut von dem Partikelträger abgelöst und am Boden der Kavität fixiert werden.

Vorteilhaft ist, wenn die an die Elektroden angelegte elektrische Spannung zwischen dem Auftragen der ersten und dem Auftragen der letzten Negativform-Schicht mindestens einmal betragsmäßig erhöht wird. Hierdurch kann einer mit zunehmender Anzahl der auf die Basisfläche aufgetragenen Materialschichten auftretenden Abnahme des Betrags des am Boden der Kavitäten der Negativform-schichten anliegenden elektrostatischen Potentials entgegengewirkt werden.

Bei einer bevorzugten Ausführungsform der Erfindung wird ein Messsignal für das elektrische Potential in der Höhe des Bodens der Kavität erfasst und mit einem Sollwert oder einem Sollwertbereich verglichen wird, wobei dass beim Auftreten einer Abweichung zwischen dem Messsignal und dem Sollwert oder dem Sollwertbereich die elektrische Spannung an den Elektroden im Sinne einer Reduzierung der Abweichung verändert wird. Hierdurch kann das elektrische Potential am Boden der Kavität über den gesamten Druckprozess ein weitgehend konstant gehalten werden.

Nachfolgend sind Ausführungsbeispiel der Erfindung näher erläutert. Es zeigt
- Fig. 1: eine schematische Darstellung einer Vorrichtung in polarer Ausführung, zum Herstellen eines dreidimensionalen Formgegenstands mittels schichtweisem Materialauftrag, wobei die Vorrichtung eine erste Abgabeeinrichtung zur Abgabe eines flüssigen und eine zweite Abgabeeinrichtung zur Abgabe eines pulverförmigen Materials hat,
- Fig. 2A bis 2F: einen Querschnitt durch einen schichtweise hergestellten Formgegenstand während unterschiedlicher Verfahrensschritte seiner Herstellung,
- Fig. 3: eine Teilaufsicht auf die in Fig. 1 gezeigte Vorrichtung, wobei eine über der zweiten Abgabeeinrichtung angeordnete Abdeckung entfernt wurde,
- Fig. 4: eine konische Beschichtungswalze,
- Fig. 5: eine Seitenansicht eines ersten Ausführungsbeispiels der zweiten Abgabeeinrichtung während des Aufbringens einer Schicht des pulverförmigen Material auf eine verfestigte Materialschicht,
- Fig. 6: eine Seitenansicht einer Span- und/oder partikelabhebenden Nivellier-Einheit während des Planfräsens, Schleifens oder Polierens einer Materialschicht,
- Fig. 7: eine dreidimensionale Ansicht eines Schichtstapels, bestehend aus den Materialschichten des ersten und zweiten Materials,
- Fig. 8: eine dreidimensionale Ansicht des Formgegenstands nach dem Entfernen der Materialschichten des ersten Materials mit Hilfe eines Lösungsmittels,
- Fig. 9: einen Querschnitt durch einen weiteren Formgegenstands nach dem Auftragen sämtlicher Materialschichten,
- Fig. 10: einen Querschnitt durch den in Fig. 9 gezeigten Formgegenstand nach dem Entfernen der Materialschichten des ersten Materials,
- Fig. 11: eine Seitenansicht eines zweiten Ausführungsbeispiels der zweiten Abgabeeinrichtung während des Aufbringens einer Schicht des pulverförmigen Material auf eine verfestigte Materialschicht,
- Fig. 12: eine Seitenansicht einer Vorrichtung in kartesischer Ausführung während des Herstellens eines dreidimensionalen Formgegenstands,
- Fig. 13: eine zylindrische Beschichtungswalze,

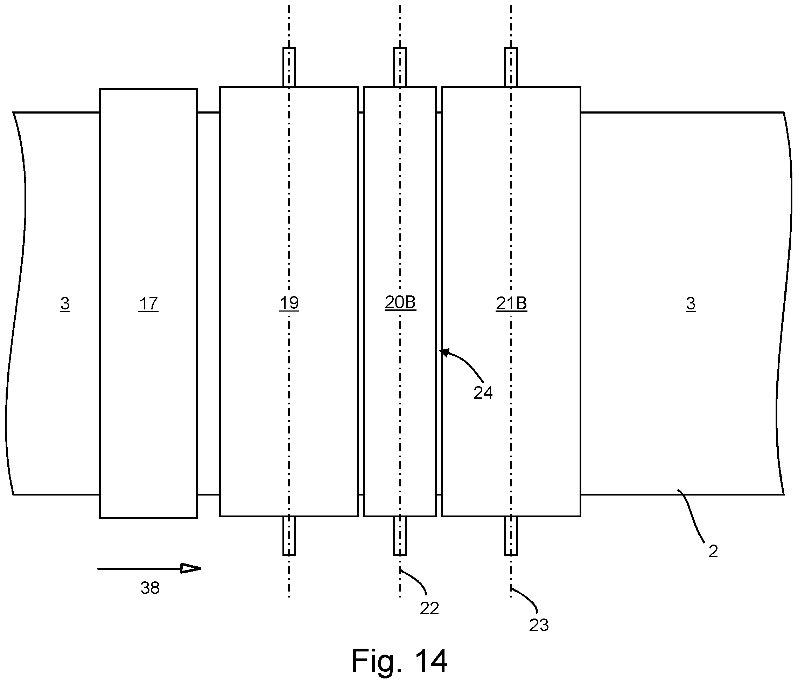

- Fig. 14: eine Aufsicht auf die zweite Abgabeeinrichtung der Vorrichtung aus Fig. 12,
- Fig. 15: eine Seitenansicht einer weiteren Vorrichtung in kartesischer Ausführung während des Herstellens eines dreidimensionalen Formgegenstands,
- Fig. 16: eine Darstellung ähnlich Fig. 15, wobei jedoch das pulverförmige Material jeweils nur im Bereich einer Kavität auf eine Materialschicht des Formgegenstands aufgetragen wird,
- Fig. 17 und 19: zeigen einen Längsschnitt einer Vorrichtung, die eine Aufladungsplatte zum Erzeugen eines elektrischen Felds an einer Basisfläche hat, auf die Materialschichten aufgetragen werden,
- Fig. 18: eine Aufsicht auf ein als Aufladungsplatte ausgestaltetes Trägerteil, und

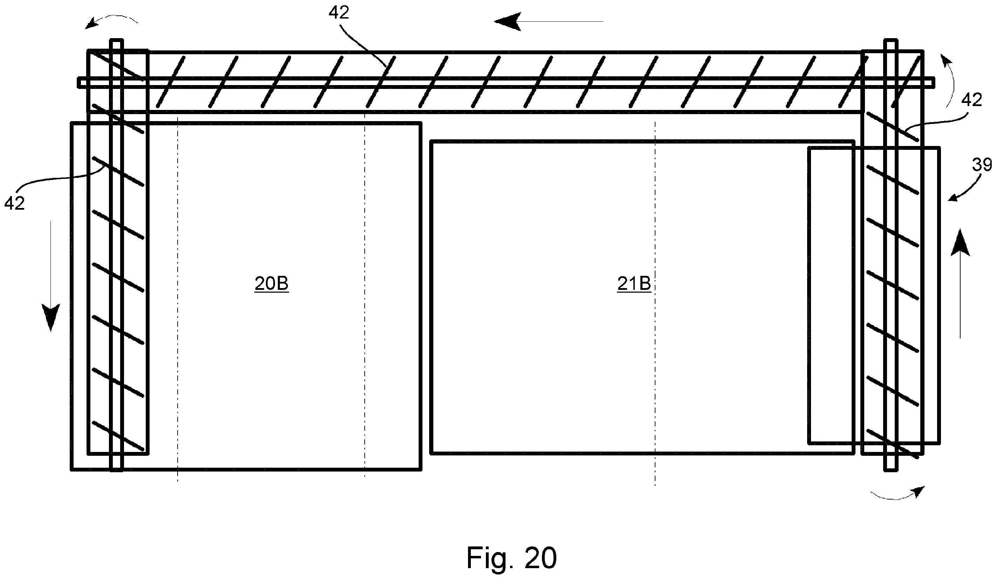

- Fig. 20: eine Teilaufsicht auf eine Vorrichtung zum Herstellen eines dreidimensionalen Formgegenstands, wobei die Vorrichtung eine Schraubenfördereinrichtung aufweist, mittels der Pulverpartikel von einer Reinigungseinrichtung zu einer Entwicklereinheit transportierbar sind.

Bei einem Verfahren zum Herstellen eines dreidimensionalen Formgegenstands 1 mittels schichtweisem Materialauftrag werden Geometriedaten für den Formgegenstand 1 von einer Steuereinheit bereitgestellt, die mit einem Computer kommuniziert, auf dem eine Software abläuft. Außerdem werden ein plattenförmiges, elektrisch leitfähiges Trägerteil 2 mit einer mit einer in einer Horizontalebene angeordneten Basisfläche 3 zur Aufnahme des Formgegenstands 1 bereitgestellt.

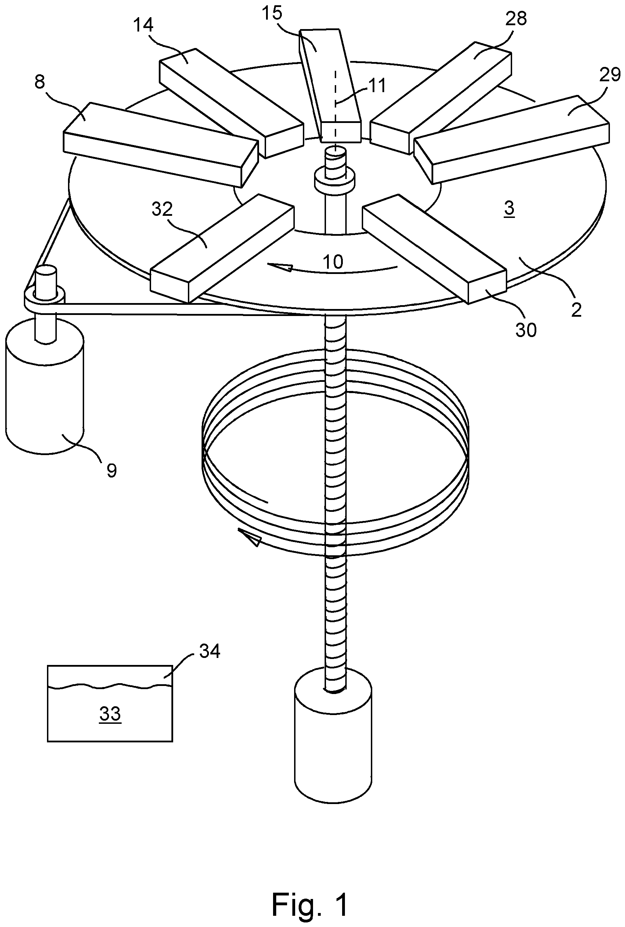

Ein erstes Ausführungsbeispiel des Verfahrens wird mit Hilfe der in Fig. 1 gezeigten Vorrichtung durchgeführt, bei der die Basisfläche 3 im Wesentlichen die Form einer Kreisringscheibe aufweist. Es sind aber auch andere Ausgestaltungen denkbar, bei denen die Basisfläche 3 insbesondere die Form einer Vollkreisscheibe aufweisen oder rechteckig ausgestaltet sein kann.

Bei dem ersten Ausführungsbeispiel werden ein verfestigbares flüssiges erstes Material 4, ein sich davon unterscheidendes pulverförmiges, verfestigbares, thermoplastische Pulverpartikel umfassendes zweites Material 5 und Wasser als Lösungsmittel für das verfestigte erste Material 4 bereitgestellt. Das verfestigte zweite Material 5 ist in dem Lösungsmittel nicht lösbar. Das zweite Material 5 weist aufgrund der darin enthaltenen Feststoffpartikel im verfestigtem Zustand eine höhere Festigkeit auf als das verfestigte erste Material 4. Das erste Material 4 ist ein Polymer, das einen Photoinitiator enthält und durch Bestrahlung mit ultravioletter Strahlung vernetzbar ist.

Das flüssige erste Material 4 ist in einem ersten Reservoir 6 und das pulverförmige zweite Material 5 in einem zweiten Reservoir 7 angeordnet. Das erste Reservoir 6 ist über eine Leitung mit einer ersten Abgabeeinrichtung 8 für das erste Material 4 verbunden. Das erste Reservoir 6 ist als im Wesentlichen geschlossener Behälter und das zweite Reservoir 7 als Wanne ausgebildet.

Die erste Abgabeeinrichtung 8 weist einen ersten Inkjet-Druckkopf mit einer Vielzahl von in einer Reihe angeordneten, in der Zeichnung nicht näher dargestellten Düsen auf, die zur Abgabe von Materialportionen des ersten Materials 4 auf die Basisfläche 3 bzw. eine darauf befindliche verfestigte Materialschicht des ersten und/oder zweiten Materials 4, 5 gerichtet sind. Die Düsenreihe ist parallel zur Ebene der Basisfläche 3 angeordnet und erstreckt sich quer zur Umfangsrichtung der Basisfläche 3, vorzugsweise im Wesentlichen radial zu deren Zentrum.

Das Trägerteil 2 und die erste Abgabeeinrichtung 8 sind mit Hilfe einer Positioniereinrichtung 9 in Richtung des Pfeils 10 relativ zueinander verdrehbar und parallel zur Rotationsachse 11 verschiebbar. Dabei bewegen sich Punkte, die in der Basisfläche 3 liegen und von der Rotationsachse 11 beabstandet sind, entlang einer wendel- oder schraubenlinienförmigen Bahnkurve.

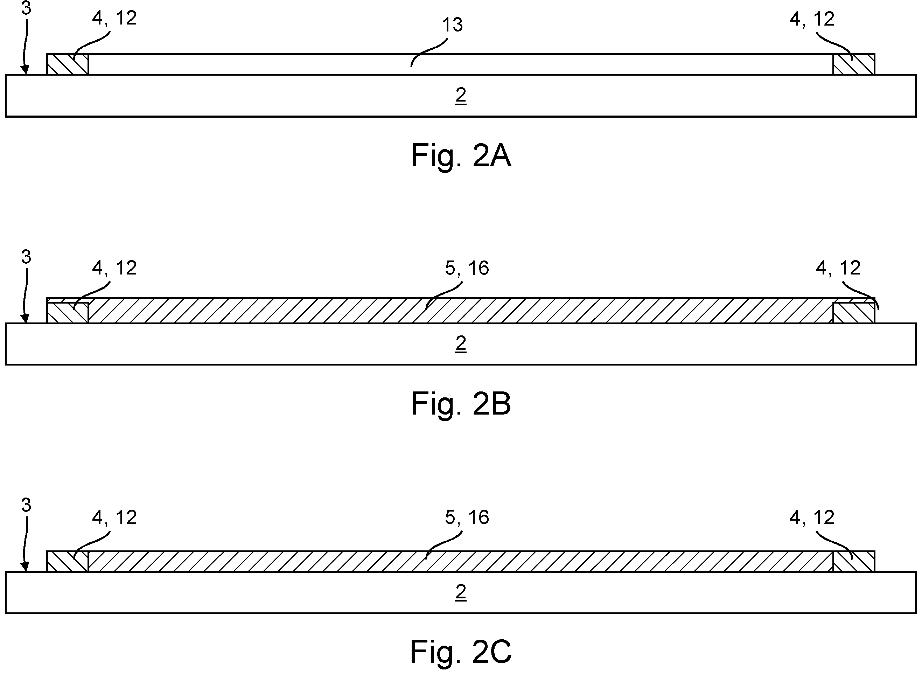

Die erste Abgabeeinrichtung 8 und die erste Positioniereinrichtung 9 sind mit einer in der Zeichnung nicht näher dargestellten Steuereinrichtung verbunden, die einen Datenspeicher zum Ablegen der Geometriedaten des herzustellenden Formgegenstands 1 aufweist. Mittels der Steuereinrichtung sind die Abgabe der Materialportionen des ersten Materials 4 und die erste Positioniereinrichtung 9 in Abhängigkeit von den Geometriedaten derart steuerbar, dass aus dem fließfähigen ersten Material 4 bestehende Negativform-Schichten 12 auf die Basisfläche bzw. eine zuvor darauf aufgebrachte verfestigte Materialschicht des ersten und/oder zweiten Materials 4, 5 aufbringbar sind (Fig. 2A). Dabei haben die Negativform-Schichten 12 jeweils mindestens eine Kavität 13, welche eine Negativform einer herzustellenden Materialschicht des Formgegenstands 1 aufweist. Die Kavitäten 13 erstecken sich jeweils über die gesamte Schichtdicke der betreffenden Negativform-Schicht 12 bis zu der Basisfläche 3 bzw. der unter der Negativform-Schicht 12 befindlichen verfestigten Materialschicht.

In Richtung des Pfeils 10 hinter der ersten Abgabeeinrichtung 8 ist eine Verfestigungseinrichtung 14 angeordnet, mittels welcher das auf die Basisfläche 3 oder eine darauf befindliche verfestigte Materialschicht aufgetragene flüssige erste Material 4 verfestigt wird. Die Verfestigungseinrichtung 14 hat zu diesem Zweck eine in der Zeichnung nicht näher dargestellte erste UV-Strahlungsquelle, mittels der ultraviolette Strahlung derart auf die zu verfestigende Materialschicht des ersten Materials abgebbar ist, dass ein in dem ersten Material enthaltener Fotovernetzer aktiviert und die in dem ersten Material 4 enthaltenen Polymere vernetzt werden.

In Richtung des Pfeils 10 hinter der Verfestigungseinrichtung 14 ist eine zweite Abgabeeinrichtung 15 angeordnet, mittels der die Kavität(en) 13 der jeweiligen, zuvor verfestigten Negativform-Schicht 12 mit dem zweiten Material 5 befüllt werden, um eine Formgegenstands-Schicht 16 zu bilden (Fig. 2B).

Die zweite Abgabeeinrichtung 15 hat eine Korona-Aufladungseinrichtung 17, die in Richtung des Pfeils 10 hinter der Verfestigungseinrichtung 14 angeordnet ist und mehrere Corona-Drähte 18 aufweist. An die Corona-Drähte 18 wird ein negatives elektrisches Potential angelegt, das sich von dem Potential eines an der ersten Abgabeeinrichtung 8 positionierten Abschnitts der Basisfläche 3 unterscheidet und dazu dient, den Boden der Kavität 13 und gegebenenfalls die Materialschicht des ersten Materials 4 an ihrer den Corona-Drähten 18 zugewandten Oberfläche elektrisch aufzuladen. Durch das an den Corona-Drähten 18 anliegende elektrische Potential wird die in dem Raum zwischen den Corona-Drähten 18 und dem diesen gegenüberliegenden Oberflächenbereich der Basisfläche 3 befindliche Luft ionisiert. Wenn eine Materialschicht des ersten Materials 4 auf der Basisfläche 3 und/oder auf einer darauf befindlichen verfestigten Materialschicht unter den Corona-Drähten 18 in Richtung des Pfeils 10 vorbeibewegt wird, wird der Boden der Kavität 13 und gegebenenfalls die den Corona-Drähten 18 zugewandte Oberfläche der aus dem ersten Material 4 bestehende Materialschicht auf ein positives erstes Potential elektrisch geladen. Der Potentialunterschied zwischen den Corona-Drähten 18 und dem Potential des Trägerteils 2 kann zum Beispiel 5 KV betragen.

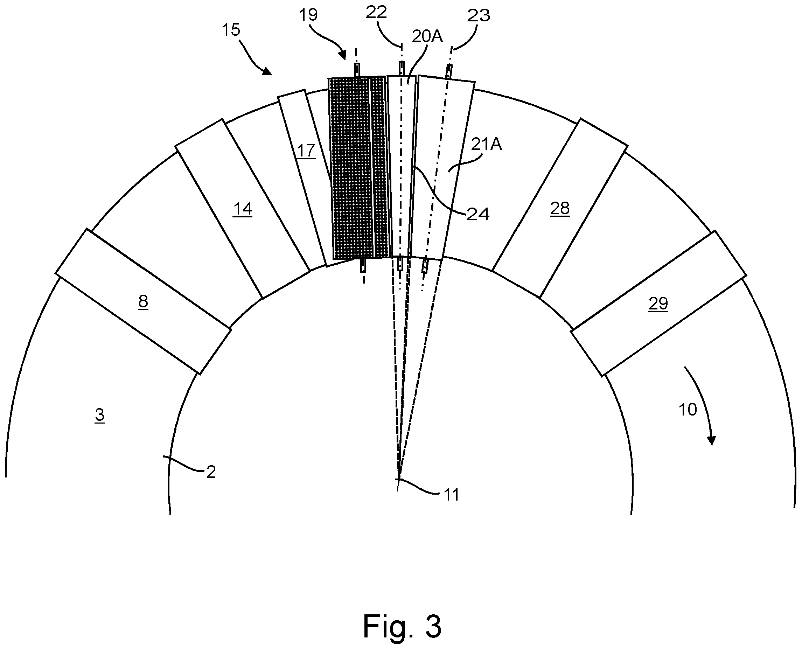

Wie in Fig. 3 zu sehen ist, weist die zweite Abgabeeinrichtung 15 eine in der Zeichnung nur schematisch dargestellte, an sich bekannte triboelektrische Aufladeeinrichtung 19, eine mit dieser zusammenwirkende konische Zuführwalze 20A und eine konische Beschichtungswalze 21A auf.

Die Zuführwalze 20A und die Beschichtungswalze 21A sind jeweils kegelstumpfförmig ausgestaltet und derart angeordnet, dass die ihrer Mantelfläche zugeordnete, gedachte Kegelspitze auf der Rotationsachse 11 des Trägerteils 2 liegt. Die Zuführwalze 20A und die Beschichtungswalze 21A sind jeweils um ihre Längsmittelachse drehbar angeordnet. **In** Fig. 3 ist zu sehen, dass die Zuführwalze 20A und die Beschichtungswalze 21A jeweils an ihren Axialenden Achsstummel aufweisen, an denen sie an ortsfesten, in der Zeichnung nicht näher dargestellten Lagerungen drehbar gelagert sind. Die Drehachsen 22, 23, um welche die Zuführwalze 20A und die Beschichtungswalze 21A jeweils drehbar gelagert sind, sind derart angeordnet, dass zwischen der Mantelfläche der Zuführwalze 20A und der Mantelfläche der Beschichtungswalze 21A ein Walzenspalt 24 gebildet ist, der in einer zwischen den Drehsachsen 22, 23 aufgespannten Ebene eine konstante Spaltweite aufweist.

Die Zuführwalze 20A hat eine durch ihren Walzenkern gebildete, elektrisch leitfähige Zuführwalzenschicht, auf der eine elektrische Isolierungsschicht angeordnet ist, welche die Mantelfläche der Zuführwalze 20A bildet. **In** entsprechender Weise hat die Beschichtungswalze 21A eine durch ihren Walzenkern gebildete elektrisch leitfähige Schicht 43, die an ihrer Mantelfläche mit einer elektrischen Isolierschicht 44 beschichtet ist.

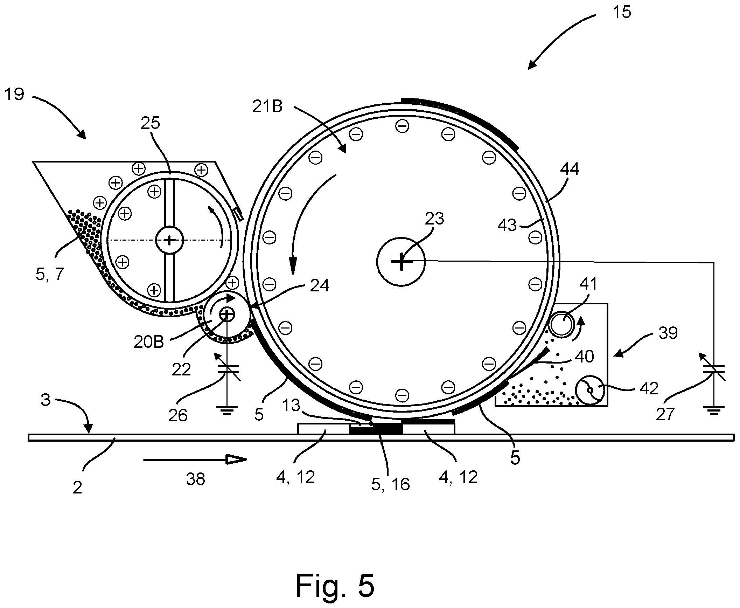

Bei dem in Fig. 3 abgebildeten Ausführungsbeispiel, hat die triboelektrische Aufladeeinrichtung 19 ein in dem zweiten Reservoir 7 angeordnetes, drehangetriebenes Rührwerkzeug 25, mittels dem die in dem zweiten Reservoir 7 befindlichen Pulverpartikel des zweiten Materials 5 derart verwirbelt werden, dass sie intensiv aneinander, an dem Rührwerkzeug 25 und an den Wandungen des zweiten Reservoirs 7 reiben. Hierbei werden die Pulverpartikel triboelektrisch auf ein positives zweites Potential elektrisch geladen. Die triboelektrische Aufladeeinrichtung 19 der in Fig. 3 gezeigten Vorrichtung entspricht der triboelektrischen Aufladeeinrichtung 19 der Vorrichtung gemäß Fig. 5.

**In** dem zweiten Reservoir 7 geraten die elektrisch geladenen Pulverpartikel an einer von dem Walzenspalt 24 beabstandeten Kontaktstelle mit der Mantelfläche der Zuführwalze 20A in Kontakt. Der elektrisch leitende Walzenkern der Zuführwalze 20A wird auf ein vom zweiten Potential abweichendes, negatives drittes Potential gelegt, das derart gewählt wird, dass die Pulverpartikel elektrostatisch an die Mantelfläche der Zuführwalze 20A angezogen werden. Das dritte elektrische Potential kann mit Hilfe eines ersten Stellelements 26 eingestellt werden.

Die Zuführwalze 20A wird derart um ihre auf der Walzenachse liegende Drehachse 22 gedreht, dass auf der Mantelfläche der Zuführwalze 20A befindliche Pulverpartikel in den Walzenspalt 24 gelangen. Auf ihrem Weg zum Walzenspalt 24 werden die Pulverpartikel durch einen Spalt definierter Spaltweite hindurchbewegt. Hierdurch wird die Materialstärke festgelegt, mit welche die Mantelfläche der Zuführwalze 20A mit dem zweiten Material 5 beschichtet wird. Überschüssige Materialpartikel werden an dem Spalt von der Zuführwalze 20A abgestreift.

An die elektrisch leitfähige Schicht 43 der Beschichtungswalze 21A wird ein viertes Potential angelegt, das derart an das dritte Potential angepasst wird, dass die Pulverpartikel in dem Walzenspalt 24 von der Mantelfläche der Zuführwalze 20A abgelöst und über die gesamte Länge des Walzenspalts 24 nichtselektiv auf die Mantelfläche der Beschichtungswalze 21A übertragen werden. Dadurch wird die Mantelfläche der Beschichtungswalze 21A nichtselektiv bzw. unterbrechungsfrei mit den Pulverpartikeln beschichtet. Das vierte elektrische Potential kann mit Hilfe eines zweiten Stellelements 27 eingestellt werden, vorzugsweise zwischen einem negativen und einem positiven Potentialwert, insbesondere von -1000 V bis +1000 V.

Durch die Drehbewegung der Beschichtungswalze 21A um deren Drehachse 23 und die Rotationsbewegung der Basisfläche 3 um die Rotationsachse 11 gelangen die auf der Mantelfläche der Beschichtungswalze 21A befindlichen Pulverpartikel an eine Materialabgabestelle, die in Umfangsrichtung der Mantelfläche zum Walzenspalt 24 versetzt ist und der Kavität 13 in der Materialschicht des ersten Materials 4 zugewandt ist. Dabei werden die Pulverpartikel derart dicht relativ zur Kavität 13 positioniert, dass sie sich durch eine durch den Potentialunterschied zwischen dem vierten und dem ersten Potential bewirkte Kraft von der Mantelfläche der Beschichtungswalze 21A ablösen und zur Bildung der Formgegenstands-Schicht 16 in die Kavität 13 übertragen werden. Dabei wird die Kavität 13 vollständig mit dem zweiten Material 5 befüllt.

Pulverpartikel, die an der Materialabgabestelle nicht von der Mantelfläche der Beschichtungswalze 21A abgelöst werden, werden mittels einer Reinigungseinrichtung 39 von der Mantelfläche der Beschichtungswalze 21A entfernt. Die Reinigungseinrichtung 39 hat einen an der Mantelfläche der Beschichtungswalze 21A angreifenden Schaber 40 und eine Reinigungswalze 41, die um eine parallel zur Rotationsachse der Beschichtungswalze 21A angeordnete Achse entgegen der Drehrichtung der Beschichtungswalze 21A drehangetrieben wird. Der Schaber 40 und die Reinigungswalze 41 sind in Drehrichtung der Beschichtungswalze 21A hinter der Materialabgabestelle und vor der Zuführwalze 20A angeordnet. Zum Entfernen von Materialpartikeln kommt die Reinigungswalze 41 an ihrem Außenumfang an der Mantelfläche der Beschichtungswalze 21A zur Anlage. Der Schaber 40 und die Reinigungswalze 41 sind in einem Auffangbehälter angeordnet, in den die von der Mantelfläche der Beschichtungswalze 21A entfernten Materialpartikel abgegeben werden. Am Boden des Auffangbehälters befindet sich eine Förderschnecke 42, mittels der die Pulverpartikel von der Reinigungseinrichtung 39 zurück in das zweite Reservoir 7 transportiert werden können, um sie einer erneuten Verwendung zuzuführen (Fig. 5, 11, 12. 17 und 19).

In Richtung des Pfeils 10 hinter der Materialabgabestelle, an der die Kavität 13 mit dem zweiten Material 5 befüllt wurde, ist eine Wärmebehandlungsstation 28 angeordnet, die beispielsweise einen Infrarotstrahler und/oder eine Blitzlampe umfassen kann. Beim Passieren der Wärmebehandlungsstation 28 wird das zuvor in die Kavität 13 eingefüllte zweiten Material 5 thermisch gesintert, wobei die darin enthaltenen Pulverpartikel miteinander und gegebenenfalls mit einer darunter befindlichen Schicht aus dem zweiten Material 5 verschmelzen.

Bei Bedarf kann in Richtung des Pfeils 10 hinter der Wärmebehandlungsstation 28 eine Vernetzungseinrichtung 29 angeordnet sein, an der ein in dem zweiten Material 5 enthaltenes Polymer und/oder Copolymer durch Bestrahlung mit ultravioletter Strahlung und/oder durch Bestrahlung mit einem Elektronenstrahl zu einem Duroplast vernetzt wird.

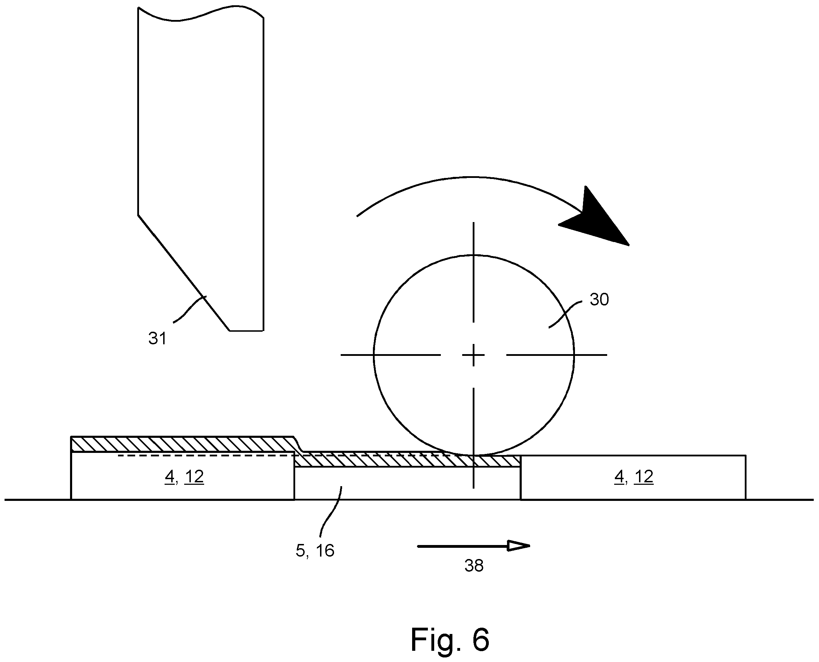

Danach werden in einem weiteren Verfahrensschritt Bereiche der verfestigten Negativform-Schicht 12 und/oder der verfestigten Formgegenstands-Schicht 16 und/oder verfestigtes zweites Material 5, das an der Negativform-Schicht angeordnet ist, mittels einer span- oder partikelabhebenden Fräs-, Schleif oder Poliereinrichtung 30 entfernt (Fig. 2C, 6). Dabei werden Bereiche des verfestigten ersten und/oder zweiten Materials 4, 5, die über eine in einem vorbestimmten Abstand zur Basisfläche parallel zu dieser angeordnete Ebene überstehen, durch spanabhebenden Materialabtrag entfernt und anschließend mittels einer Saugdüse 31 abgesaugt. Bei Bedarf kann hinter der Saugdüse 31 eine Oberflächenreinigungseinrichtung 32 angeordnet sein. Diese kann eine rotierende Bürste zum Abbürsten der zuletzt aufgetragenen Materialschicht des Formgegenstands umfassen.

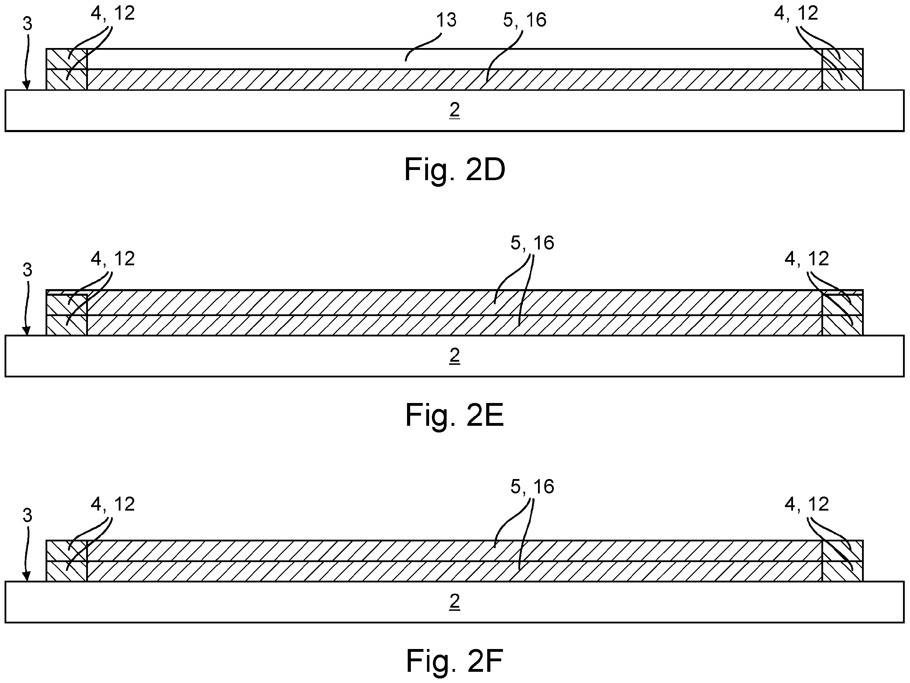

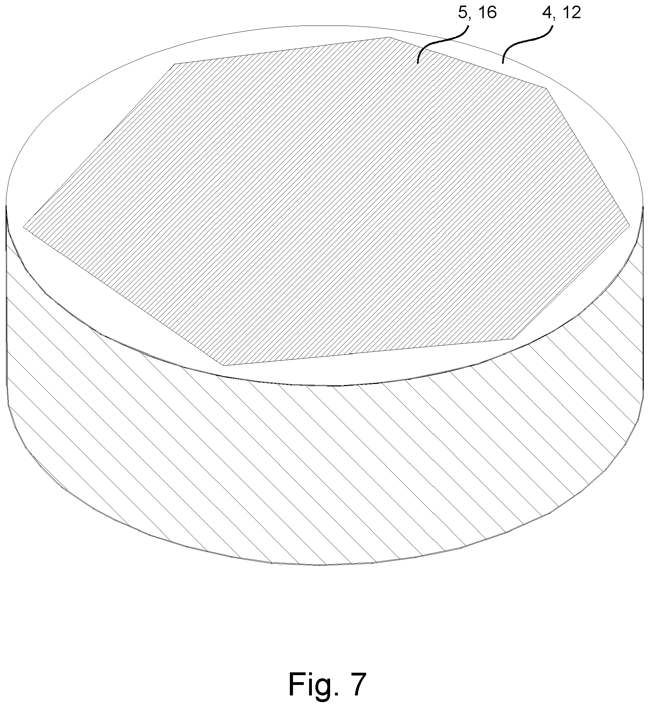

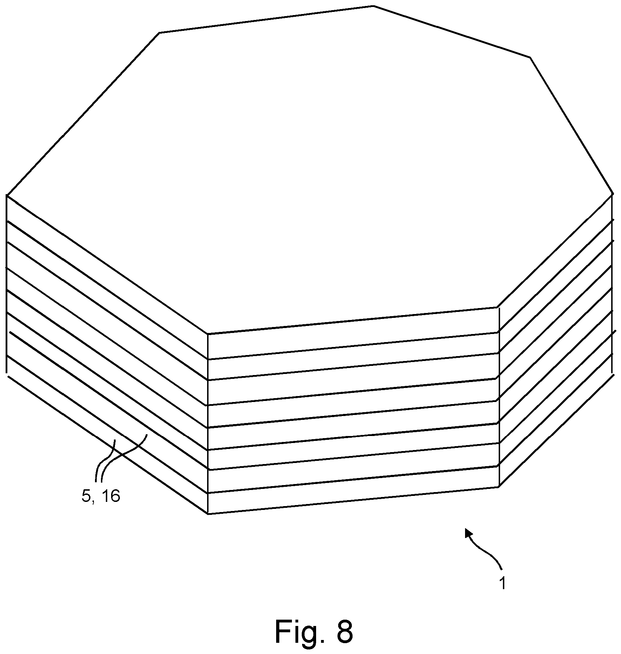

Nun werden in entsprechender Weise auf die Oberfläche der verfestigten Negativform-Schicht 12 und der Formgegenstands-Schicht 16 eine weitere Negativform-Schicht 12 (Fig. 2D) und eine weitere Formgegenstands-Schicht 16 aufgebracht (Fig. 2E, 2F) aufgebracht. Diese Schritte werden solange wiederholt, bis sämtliche Formgegenstands-Schichten 16 des herzustellenden Formgegenstands erzeugt sind (Fig. 7 und 8).

In einem weiteren Verfahrensschritt werden die Negativform-Schichten 12 derart mit dem Lösungsmittel 33 in Kontakt gebracht, dass sich das verfestigte erste Material 4 vollständig in dem Lösungsmittel auflöst. Dies kann beispielsweise dadurch erreicht werden, dass der aus den Negativform-Schichten 12 und den Formgegenstands-Schichten 16 bestehende Schichtstapel für eine vorbestimmte Zeitdauer in das in das in einem Behälter 34 befindliche Lösungsmittel 33 eingetaucht und gegebenenfalls mit Ultraschall behandelt wird. Danach wird der fertige Formgegenstand (Fig. 8) aus dem Lösungsmittel 33 entnommen und getrocknet.

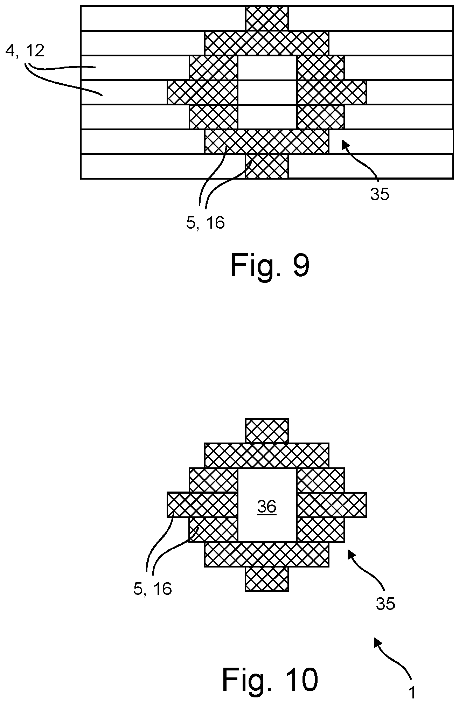

Wie in Fig. 9 und 10 zu sehen ist, lassen sich mit dem erfindungsgemäßen Verfahren auch Formgegenstände mit Überhängen 35 und Hohlräumen 36 herstellen.

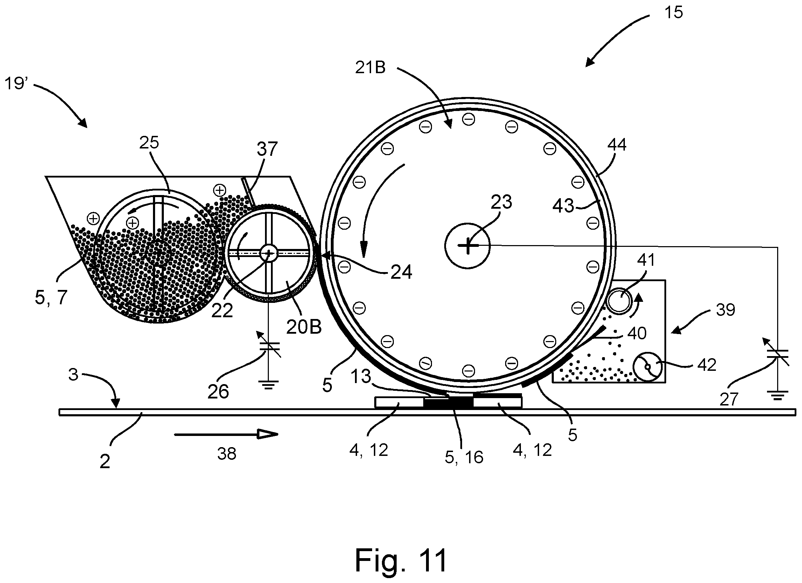

Bei einem zweiten Ausführungsbeispiel wird anstelle das unmagnetischen Toners ein magnetischer Toner verwendet. Das Verfahren wird mit einer Vorrichtung durchgeführt, die sich dadurch von der in Fig. 1 und 3 gezeigten Vorrichtung unterscheidet, das anstelle der in Fig. 5 abgebildeten triboelektrischen Aufladeeinrichtung 19 die in Fig. 11 abgebildete triboelektrische Aufladeeinrichtung 19' und anstelle der konischen Zuführwalze 20A eine entsprechende konische Zuführwalze verwendet wird, die an ihrer Mantelfläche magnetisch ist. Das Magnetfeld wird mit Hilfe von ortsfesten Permanentmagneten erzeugt, die im Inneren der Zuführwalze 20A angeordnet sind. Im Übrigen entspricht die Vorrichtung, die für das zweite Ausführungsbeispiel verwendet wird, der Vorrichtung gemäß den Fig. 1 und 3. Insoweit gilt die Beschreibung des ersten Ausführungsbeispiel für das zweite Ausführungsbeispiel entsprechend.

Bei dem zweiten Ausführungsbeispiel werden magnetisch leitfähige Trägerpartikel bereitgestellt und in dem zweiten Reservoir 7 derart mit den Pulverpartikeln des zweiten Materials 5 in Kontakt gebracht, dass die Pulverpartikel an den Trägerpartikeln lösbar haften bleiben. Die magnetisch leitfähigen Trägerpartikel mit den daran anhaftenden Pulverpartikeln werden an einer vom Walzenspalt beabstandeten Stelle derart mit der Mantelfläche der Zuführwalze in Kontakt gebracht, dass die Trägerpartikel magnetisch an der kegelmantelförmigen Mantelfläche der Zuführwalze haften bleiben.

Bei der Drehung der Zuführwalze um ihre Achse werden die auf der Mantelfläche der Zuführwalze befindlichen Trägerpartikel mit den daran anhaftenden Pulverpartikeln zunächst an einer Abstreifeinrichtung 37 vorbeibewegt, an der mit Pulverpartikeln beschichtete Trägerpartikel von der konischen Mantelfläche der Zuführwalze entfernt werden. Wie in Fig. 11 zu sehen ist, wird dadurch die Mantelfläche hinter der Abstreifeinrichtung 37 mit einer die Trägerpartikel und die darauf befindlichen Pulverpartikel aufweisenden Schicht mit definierter Schichtdicke beschichtet. Nach Durchlaufen der Abstreifeinrichtung 37 gelangen die mit den Pulverpartikeln beschichteten Trägerpartikel in den zwischen der konischen Zuführwalze und der konischen Beschichtungswalze 21A gebildeten Walzenspalt.

An den elektrisch leitfähigen Walzenkern der Beschichtungswalze 21A wird ein von dem Potential der an den Trägerpartikeln anhaftenden Pulverpartikel abweichendes elektrisches Potential angelegt, das derart gewählt wird, dass die Pulverpartikel in dem Walzenspalt von den Trägerpartikeln abgelöst und auf die Mantelfläche der Beschichtungswalze 21A übertragen werden. Die Trägerpartikel verbleiben auf der Mantelfläche der Zuführwalze und gelangen durch deren Drehbewegung wieder in den Wirkungsbereich des Rührwerkzeugs 25, wo sie erneut mit Pulverpartikeln (Toner) des zweiten Materials beschichtet werden.

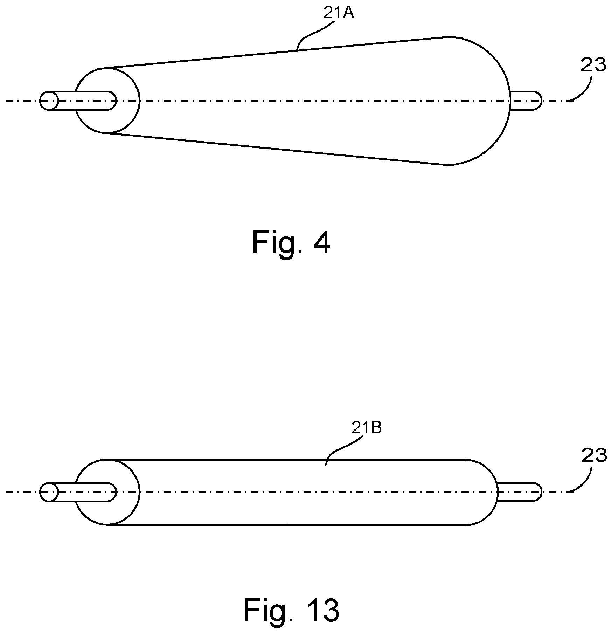

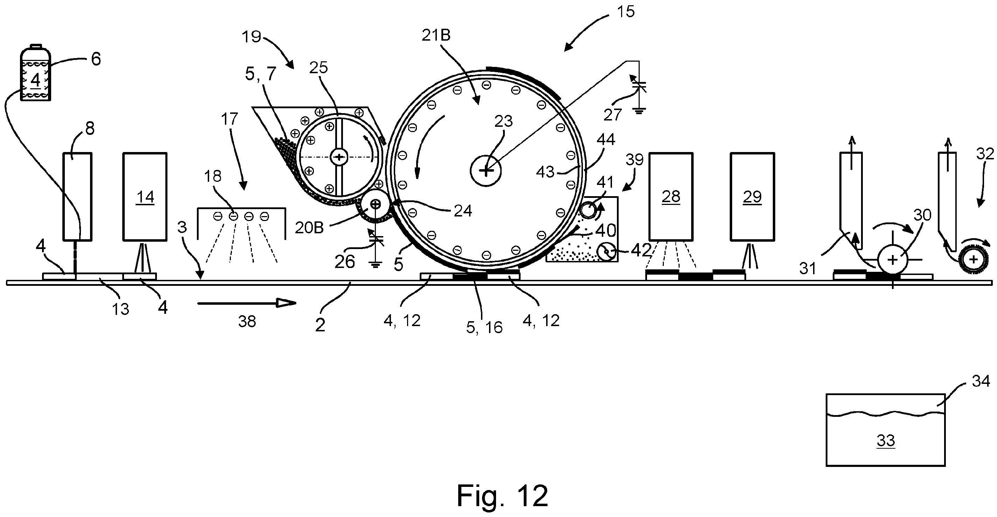

Für die Durchführung eines dritten Ausführungsbeispiels wird die in Fig. 12 abgebildete Vorrichtung verwendet, bei der die einzelnen Bearbeitungsstationen, nämlich die erste Abgabeeinrichtung 8, die Verfestigungseinrichtung 14, die zweite Abgabeeinrichtung 15, die Wärmebehandlungsstation 28, gegebenenfalls die Vernetzungseinrichtung 29, die span- oder partikelabhebenden Fräs-, Schleif oder Poliereinrichtung 30 und gegebenenfalls die Oberflächenreinigungseinrichtung 32 in gerader Linie hintereinander angeordnet sind. Bei der in Fig. 12 abgebildeten Vorrichtung sind sowohl die Zuführwalze 20B als auch die Beschichtungswalze 21B jeweils zylindrisch ausgestaltet (Fig. 13). Die Beschichtungswalze 21B hat eine elektrisch leitfähige Schicht 43 (Walzenkern), die an ihrer Mantelfläche mit einer elektrischen Isolierschicht 44 beschichtet ist.

Im Unterschied zu dem ersten und zweiten Ausführungsbeispiel wird bei dem dritten Ausführungsbeispiel das die Basisfläche 3 aufweisende Trägerteil 2 nicht rotiert sondern zum Auftragen einer Materialschicht
a) von einer Ausgangslage in eine Transportrichtung 38 in eine Endlage verschoben und
b) danach - falls eine weitere Materialschicht aufgetragen werden soll - von der Endlage entgegen der Transportrichtung 38 zurück in die Ausgangslage verschoben.

Außerdem wird das Trägerteil 2 während und/oder zwischen den Schritten a) und b) relativ zur Beschichtungswalze abgesenkt. Die vorstehend genannten Schritte werden bei jedem Auftragen einer Materialschicht wiederholt, bis alle Materialschichten des Formgegenstands 1 übereinandergeschichtet sind.

Im Übrigen entspricht das dritte Ausführungsbeispiel dem ersten Ausführungsbeispiel. Die Beschreibung für das erste Ausführungsbeispiel gilt deshalb insoweit für das dritte Ausführungsbeispiel entsprechend.

Bei einem vierten Ausführungsbeispiel wird anstelle das unmagnetischen Toners ein magnetischer Toner verwendet. Das Verfahren wird mit einer Vorrichtung durchgeführt, die sich dadurch von der in Fig. 12 gezeigten Vorrichtung unterscheidet, dass anstelle der in Fig. 12 abgebildeten triboelektrischen Aufladeeinrichtung 19 eine triboelektrische Aufladeeinrichtung 19' ähnlich Fig. 11 verwendet wird, die eine zylindrische Zuführwalze und eine zylindrische Beschichtungswalze hat. Dabei ist die zylindrische Zuführwalze an ihrer Mantelfläche magnetisch. Im Übrigen entspricht die Vorrichtung, die für das vierte Ausführungsbeispiel verwendet wird, der Vorrichtung gemäß Fig. 12. Insoweit gilt die Beschreibung des dritten Ausführungsbeispiel für das vierte Ausführungsbeispiel entsprechend. Bezüglich der Beschreibung der Aufladeeinrichtung 19' wird auf die Beschreibung für das zweite Ausführungsbeispiels verwiesen.

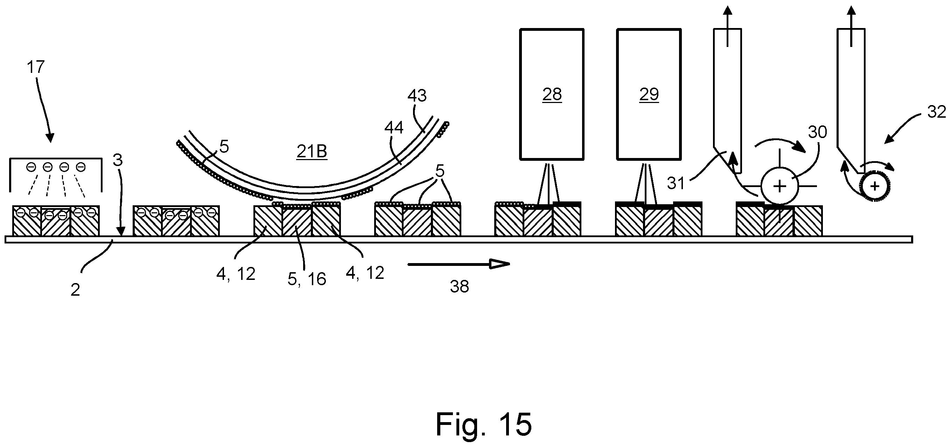

Bei dem ersten bis vierten Ausführungsbeispiel und bei dem in Fig. 15 dargestellten fünften Ausführungsbeispiel wird das pulverförmige zweite Material 5 mit Hilfe der Beschichtungswalze 21B jeweils sowohl flächig in die Kavität 13 eingebracht als auch ganzflächig auf die der Beschichtungswalze 21B zugewandte Oberfläche der Negativform-Schicht 12 aufgetragen. Nach dem Verfestigen wird das auf die Negativform-Schicht 12 aufgetragene zweite Material 5 mit Hilfe der span- oder partikelabhebenden Fräs-, Schleif oder Poliereinrichtung 30 vollständig entfernt. Gleichzeitig wird Material, das im Bereich der Kavität aufgetragen wurde und über eine in einem vorbestimmten Abstand zur Basisfläche angeordnete Ebene übersteht entfernt, um eine exakt plane Oberfläche zu erreichen, die sich durchgängig über die Kavität 13 und die Negativform-Schicht 12 erstreckt.

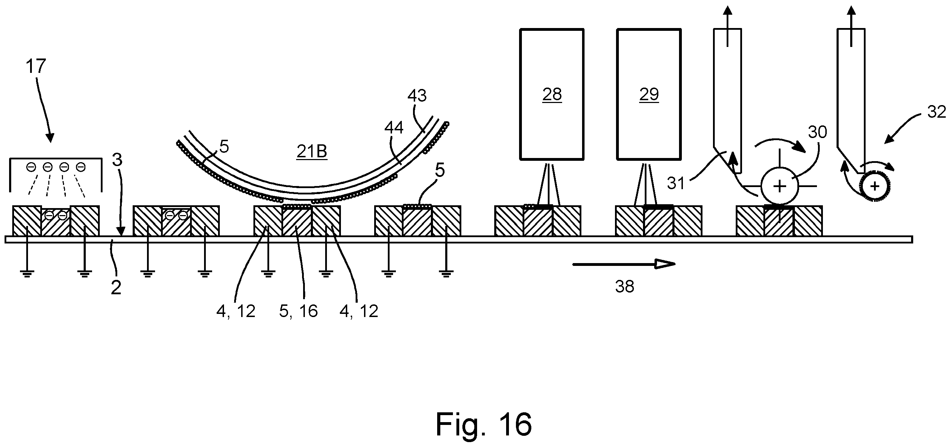

Bei einem in Fig. 16 dargestellten sechsten Ausführungsbeispiel wird das pulverförmige zweite Material 5 mittels der an ihrer Mantelfläche ganzflächig damit beschichteten Beschichtungswalze 21B nur da aufgetragen, wo die Kavität 13 ist. Die Oberfläche der Negativform-Schicht 12 wird dagegen nicht mit dem zweiten Material 5 beschichtet. Hierdurch reduziert sich der Materialverbrauch des zweiten Materials 5 entsprechend.

Das wird dadurch erreicht, dass als erstes Material 4 ein elektrisch leitfähiges Material und als zweites Material 5 ein elektrisch isolierendes Material verwendet wird und dass die Negativform-Schicht 12 auf ein elektrisches Potential gelegt wird, das sich derart von dem elektrischen Potential der auf der Mantelfläche der Beschichtungswalze 21B befindlichen Pulverpartikel des zweiten Materials und derart vom Potential der elektrisch leitfähigen Schicht 43 der Beschichtungswalze 21B unterscheidet, dass beim Positionieren der Negativform-Schicht 12 an der Mantelfläche der Beschichtungswalze 21B praktisch keine Pulverpartikel von der Mantelfläche auf die Negativform-Schicht 12 übertragen werden. Bei dem Ausführungsbeispiel in Fig. 16 wird die Negativform-Schicht 12 auf Massepotential, die elektrisch leitfähige Schicht 43 der Beschichtungswalze 21B auf ein negatives Potential gelegt und die Pulverpartikel des zweiten Materials 5 werden auf ein positives Potential geladen.

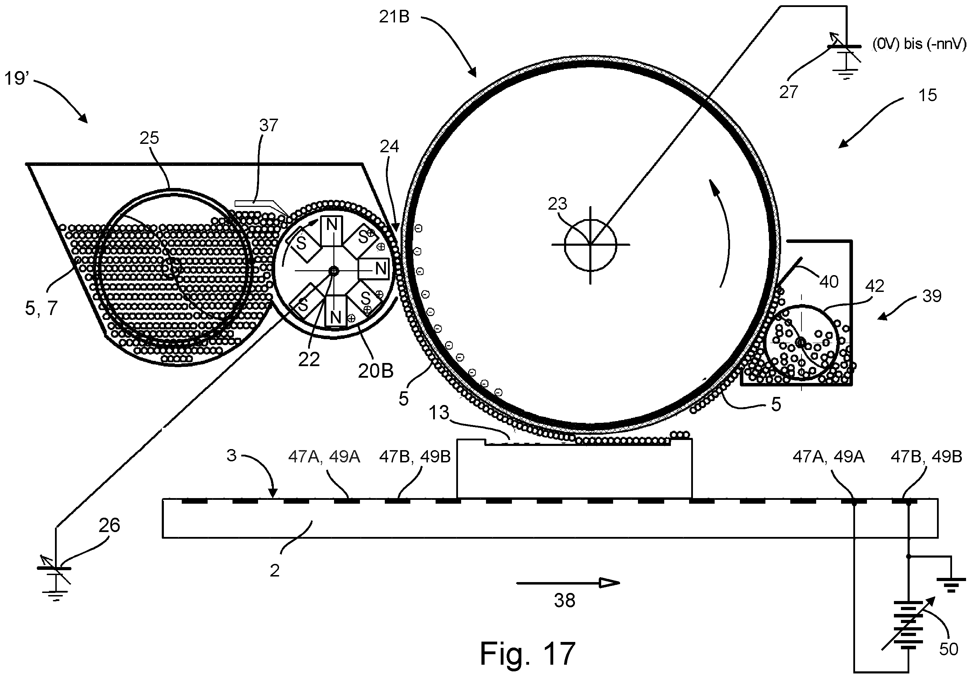

Bei einem in Fig. 17 gezeigten siebten Ausführungsbeispiel wird das elektrische Potential an der Basisfläche 3 mit Hilfe eines als Aufladungsplatte ausgestalteten Trägerteils 2 erzeugt, das unterhalb der Beschichtungswalze in das Trägerteil 2 integrierte Elektroden 47A, 47B aufweist. Hierdurch entfällt eine Ladekorona oder sie wir optional dazu geschaltet.

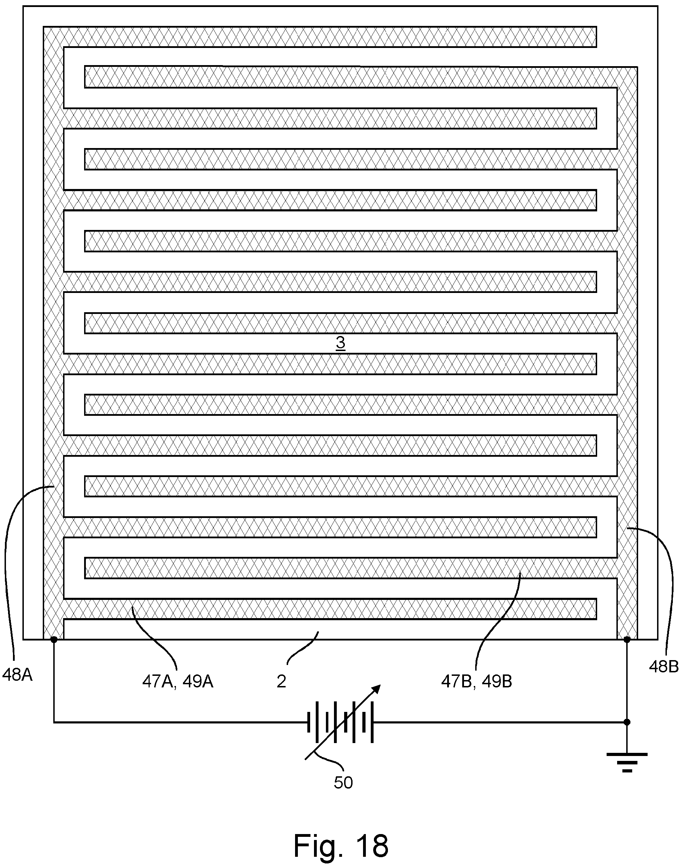

Wie in Fig. 18 zu sehen ist, sind die Elektroden 47A, 47B jeweils kammartig ausgestaltet. Jede Elektrode 47A, 47B hat einen Längssteg 48A, 48B, an dem jeweils mehrere parallel zueinander verlaufende Querstege 49A, 49B angeordnet sind. Die Elektroden 47A, 47B verlaufen parallel zur Basisfläche 3 und grenzen direkt an diese an oder sind dicht zu dieser benachbart. Zwischen und/oder unter den Elektroden 47A, 47B ist ein elektrisches Isolationsmaterial angeordnet, beispielsweise Verguss-Masse, oder Glas.

Zwischen die Elektroden 47A, 47B wird eine konstante elektrische Spannung angelegt, die mittels eines vierten Stellelements 51 einstellbar ist, vorzugsweise auf einen Wert zwischen 0 und -45 kV. Eine Elektrode 48B liegt auf Massepotential. Das durch die Spannung erzeugte elektrische Feld durchdringt die Negativform-Schichten 12 und die Formgegenstands-Schichten 16. Das erste Material 4 und das zweite Material 5 enthalten jeweils Dipole, die sich in dem elektrischen Feld etwa parallel zu dessen Feldlinien ausrichten. Hierdurch werden auf der Mantelfläche der Beschichtungswalze 21B befindliche Pulverpartikel, die in den Übertragungsspalt 47 gelangen, derart elektrostatisch an den Boden der Kavität 13 angezogen, dass sie sich von der Mantelfläche der Beschichtungswalze 21B ablösen und auf dem Boden der Kavität 13 absetzten.

Bei Bedarf kann das elektrische Potential am Boden der Kavität 13 beispielsweise mit Hilfe einer in der Zeichnung nicht näher dargestellten Sonde gemessen und mit einem Sollwert verglichen werden. Wird dabei eine Abweichung zwischen dem Messwert und dem Sollwert festgestellt, wird das Potential, welches an den Elektroden 47A, 47B des Trägerteils 2 anliegt, im Sinne einer Reduzierung der Abweichung verändert. Das Potential am Boden der Kavität 13 kann also auf den Sollwert geregelt werden. Hierdurch wird vermieden, dass das Potential am Boden der Kavität 13 mit zunehmender Anzahl der auf die Basisfläche 3 aufgetragenen Material- bzw. Negativformschichten betragsmäßig abnimmt, wenn sich der Abstand zwischen dem Boden der Kavität 13 und den Elektroden 47A, 47B vergrößert.

Im Übrigen entspricht das siebte Ausführungsbeispiel im Wesentlichen dem Ausführungsbeispiel gemäß Fig. 11. Die Beschreibung des zweiten Ausführungsbeispiels gilt insoweit für das siebte Ausführungsbeispiel entsprechend. Die Beschichtungswalze und die Zuführwalze können bei dem siebten Ausführungsbeispiel konisch oder zylindrisch ausgestaltet sein.

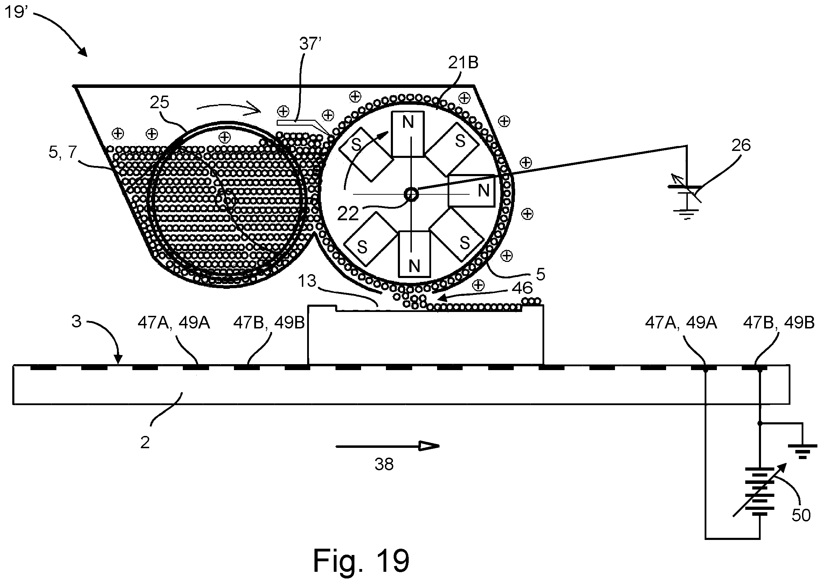

Bei einem in Fig. 19 zu abgebildeten achten Ausführungsbeispiel werden magnetisch leitfähige Trägerpartikel in einem Reservoir 7 bereitgestellt und mit Hilfe eines in dem Reservoir 7 befindlichen Rührwerkzeugs 25 derart mit den Pulverpartikeln des zweiten Materials 5 in Kontakt gebracht, dass die Pulverpartikel an den Trägerpartikeln lösbar haften bleiben. Es wird eine Beschichtungswalze 21B mit einer magnetischen Mantelfläche bereitgestellt, die durch einen Übertragungsspalt 47 vom Boden der mit den Pulverpartikeln zu befüllenden Kavität 13 beabstandet ist.

Die magnetischen Trägerpartikel mit den daran anhaftenden Pulverpartikeln werden an einer von der Kavität 13 beabstandeten Stelle derart mit der Mantelfläche der Beschichtungswalze 21B in Kontakt gebracht werden, dass die mit den Pulverpartikeln beschichteten Trägerpartikel magnetisch an der Mantelfläche der Beschichtungswalze 21B haften bleiben.

Die Beschichtungswalze 21B wird derart um ihre Drehachse 22 gedreht, dass auf der Mantelfläche der Beschichtungswalze 21B befindliche Trägerpartikel mit den daran anhaftenden Pulverpartikeln zunächst zum Absteifen von mit Pulverpartikeln beschichteten Trägerpartikeln an einer Abstreifeinrichtung 37' vorbeibewegt werden und nach Durchlaufen der Abstreifeinrichtung 37' in den Übertragungsspalt 47 gelangen. Durch das zwischen den Elektroden 47A, 47B anliegende elektrische Feld werden die auf den Trägerpartikeln befindliche Pulverpartikel, die an der Mantelfläche der Beschichtungswalze in den Übertragungsspalt 47 gelangen, derart elektrostatisch an den Boden der Kavität 13 angezogen, dass sie sich von den Trägerpartikeln ablösen und auf dem Boden der Kavität 13 absetzten.

Im Übrigen entspricht das achte Ausführungsbeispiel im Wesentlichen dem siebten Ausführungsbeispiel. Insoweit gilt die Beschreibung des siebten Ausführungsbeispiel für das achte Ausführungsbeispiel entsprechend.

## Patentansprüche

1. Verfahren zum Herstellen eines dreidimensionalen Formgegenstands (1) mittels schichtweisem Materialauftrag, wobei Geometriedaten für den Formgegenstand (1), ein Trägerteil (2) mit einer Basisfläche (3) zur Aufnahme des dreidimensionalen Formgegenstands (1), ein verfestigbares flüssiges, fließfähiges oder pulverförmiges erstes Material (4), ein pulverförmiges, thermoplastische Pulverpartikel umfassendes zweites Material (5) und ein Lösungsmittel bereitgestellt werden, in dem das verfestigte erste Material (4) lösbar ist und das verfestigte zweite Material (5) unlösbar ist,
a) wobei zur Bildung einer Negativform-Schicht (12) Materialportionen des fließfähigen, flüssigen oder pulverförmigen ersten Materials (4) derart entsprechend den Geometriedaten auf die Basisfläche (3) und/oder eine darauf befindliche verfestigte Materialschicht aufgebracht werden, dass die Negativform-Schicht (12) an ihrer der Basisfläche (3) abgewandten Oberfläche mindestens eine Kavität (13) hat, welche eine Negativform einer herzustellenden Formgegenstands-Schicht (16) aufweist,
b) wobei die Negativform-Schicht (12) verfestigt wird,
c) wobei zumindest der durch die Basisfläche (3) oder eine darauf befindliche verfestigte Materialschicht gebildete Boden der Kavität (13) auf ein elektrisches Potential einer ersten Polarität geladen wird,
d) wobei Pulverpartikel des zweiten Materials auf ein elektrisches Potential mit zur ersten Polarität entgegengesetzter zweiter Polarität geladen und flächig auf eine Trägeroberfläche eines Partikelträgers aufgebracht werden,
e) wobei die Trägeroberfläche mit den darauf befindlichen Pulverpartikeln der mindestens einen Kavität (13) zugewandt und derart relativ zur Kavität (13) positioniert wird, dass die Pulverpartikel von der Trägeroberfläche in die Kavität (13) übertragen werden und in dieser eine Formgegenstands-Schicht (16) mit zu der Negativform passender Positivform bilden,
f) wobei die so erhaltene Formgegenstands-Schicht (16) durch Wärmeeinwirkung gesintert und verfestigt wird,
g) wobei über eine in einem vorbestimmten Abstand zur Basisfläche (3) angeordnete Ebene überstehende Bereiche der verfestigten Negativform-Schicht (12) und/oder der verfestigten Formgegenstandsschicht (16) durch Materialabtrag derart entfernt werden, dass eine plane Oberfläche hergestellt wird, die sich über die Negativform-Schicht (12) und die Formgegenstands-Schicht (16) erstreckt,
h) wobei die Schritte a) bis g) mindestens ein Mal wiederholt werden, und
i) wobei danach die Negativform-Schichten (12) derart mit dem Lösungsmittel in Kontakt gebracht werden, dass sich das verfestigte erste Material (4) in dem Lösungsmittel löst.

2. Verfahren nach Anspruch 1, **dadurch gekennzeichnet, dass** die Materialportionen des ersten Materials (4) mittels eines Materialauftragungs-Druckverfahrens, vorzugsweise Tintenstrahl-Druckverfahrens auf die Basisfläche und/oder die darauf befindliche verfestigte Negativform-Schicht (12) und/oder eine verfestigte Formgegenstands-Schicht (16) aufgebracht werden, und das erste Material (4) ein durch Einwirkung von Energie verfestigbares Material ist, das zum Verfestigen der Negativform-Schicht (12) mit der Energie beaufschlagt wird.

3. Verfahren nach Anspruch 2, **dadurch gekennzeichnet, dass** das erste Material (4) eine zum Tintenstrahl-Drucken geeignete Arbeits-Viskosität hat, die geringer als 1000 mPa·s, insbesondere geringer als 100 mPa·s, gegebenenfalls geringer als 30 mPa·s und bevorzugt geringer als 20 mPa·s hat und in Form von Flüssigkeitströpfchen mit einer Auflösung von mindestens 180 dpi, insbesondere mindestens 360 dpi und bevorzugt mindestens 720 dpi oder 1440 dpi auf die Basisfläche und/oder die darauf befindliche verfestigte Materialschicht des dreidimensionalen Formgegenstands (1) aufgebracht wird.

4. Verfahren nach einem der Ansprüche 1 bis 3, **dadurch gekennzeichnet, dass** in Schritt g) von Patentanspruch 1 die über die Ebene überstehende Bereiche der verfestigten Negativform-Schicht (12) und/oder der verfestigten Formgegenstandsschicht (16) durch span- oder partikelabhebenden Materialabtrag entfernt wird, insbesondere durch Fräsen, Schleifen, Lasern und Reinigen und/oder Polieren.

5. Verfahren nach einem der Ansprüche 1 bis 4, **dadurch gekennzeichnet, dass** die Pulverpartikel in Schritt d) des Patentanspruchs 1 triboelektrisch geladen werden.

6. Verfahren nach einem der Ansprüche 1 bis 5, **dadurch gekennzeichnet, dass** der Partikelträger eine elektrisch leitfähige Schicht (43) mit einer darauf befindlichen Isolierschicht (44) aufweist, und dass an die elektrisch leitfähige Schicht (43) derart ein elektrisches Potential der ersten Polarität angelegt wird, dass an der Trägeroberfläche befindliche Partikel durch die Isolierschicht (44) hindurch elektrostatisch an diese angezogen werden.

7. Verfahren nach einem der Ansprüche 1 bis 5, **dadurch gekennzeichnet, dass** der Partikelträger eine elektrisch leitfähige Schicht mit einer darauf befindlichen aktiven Schicht aufweist, deren elektrische Leitfähigkeit durch Belichten mit optischer Strahlung veränderbar ist, dass die aktive Schicht selektiv mittels eines Elektrophotographieverfahrens mit einem elektrischen Potential strukturiert wird, dass die aktive Schicht danach derart mit den Pulverpartikeln des zweiten Materials in Kontakt gebracht wird, dass diese in Abhängigkeit von der Strukturierung der aktiven Schicht mit dem elektrischen Potential an der aktiven Schicht anhaften, und dass die so mit den Pulverpartikeln strukturierte aktive Schicht an der Kavität (13) positioniert wird, um die Pulverpartikel in die Kavität (13) zu übertragen.

8. Verfahren nach einem der Ansprüche 1 bis 7, **dadurch gekennzeichnet, dass** die Pulverpartikel in Schritt d) des Patentanspruchs 1 mit Hilfe einer triboelektrischen Aufladeeinrichtung (19) geladen werden, die ein mit den Pulverpartikeln befülltes Reservoir (7) und ein mit den Pulverpartikeln in Kontakt stehendes Rührwerkzeug (25) aufweist, das derart ausgestaltet ist und relativ zu den Pulverpartikeln bewegt wird, dass diese elektrisch geladen werden.

9. Verfahren nach einem der Ansprüche 1 bis 8, **dadurch gekennzeichnet, dass** als Partikelträger eine Beschichtungswalze (21A, 21B) verwendet wird, deren Mantelfläche als Trägeroberfläche für die Pulverpartikel dient, dass die Mantelfläche an einer ersten Stelle mit den das Potential der zweiten Polarität aufweisenden Pulverpartikeln in Kontakt gebracht und die Beschichtungswalze (21A, 21B) zum flächigen Beschichten der aktiven Mantelfläche mit den Pulverpartikeln um die Walzenachse der Beschichtungswalze (21A, 21B) relativ zur ersten Stelle gedreht wird, und dass die Mantelfläche an einer mit den Pulverpartikeln beschichteten zweiten Stelle, welche in Umfangsrichtung der Mantelfläche zur ersten Stelle versetzt ist, der Kavität (13) zugewandt und derart dicht relativ zur Kavität (13) positioniert wird, dass die Pulverpartikel zur Bildung der Formgegenstands-Schicht (16) von der Mantelfläche in die Kavität (13) übertragen werden.

10. Verfahren nach Anspruch 9, **dadurch gekennzeichnet, dass** Pulverpartikel, die an einem Abschnitt der Mantelfläche der Beschichtungswalze (21A, 21B) anhaften, der in Rotationsrichtung hinter der zweiten Stelle und vor der ersten Stelle liegt, von der Mantelfläche entfernt und in das Reservoir (7) zurücktransportiert werden.

11. Verfahren nach Anspruch 9 oder 10, **dadurch gekennzeichnet, dass** als Beschichtungswalze (21B) eine zylindrische Walze verwendet wird, dass das die Basisfläche (3) aufweisende Trägerteil (2)
i) zum Auftragen einer ersten Materialschicht, ausgehend von einer Ausgangslage in eine Vorwärtstransportrichtung relativ zur Beschichtungswalze (21B) verschoben wird,
ii) danach relativ zur Beschichtungswalze (21B) zurück in die Ausgangslage zurückbewegt,
iii) dann zum Auftragen einer zweiten Materialschicht erneut relativ zur Beschichtungswalze (21B) in die Vorwärtstransportrichtung verschoben wird,
und dass das Trägerteil (2) während und/oder zwischen den Schritten i) bis iii) relativ zur Beschichtungswalze (21B) abgesenkt wird.

12. Verfahren nach Anspruch 9 oder 10, **dadurch gekennzeichnet, dass** das die Basisfläche (3) aufweisende Trägerteil (2) während des Materialauftrags und gegebenenfalls während des Verfestigens der Materialien (4, 5) um eine quer zur Zylinderachse der Beschichtungswalze (21A) angeordnete Rotationsachse (11) relativ zur Beschichtungswalze (21A) gedreht und gegebenenfalls während der Drehbewegung relativ zur Beschichtungswalze (21A) abgesenkt wird, und dass die Beschichtungswalze (21A) als konische Walze ausgestaltet wird, deren Walzenquerschnitt, ausgehend von ihrem von der Rotationsachse (11) entfernten Ende zu ihrem näher an der Rotationsachse (11) angeordneten anderen Ende abnimmt.

13. Verfahren nach einem der Ansprüche 9 bis 12, **dadurch gekennzeichnet, dass** eine Zuführwalze (20A) für die Pulverpartikel bereitgestellt wird, die mit ihrer Mantelfläche durch einen Walzenspalt (24) von der Mantelfläche der Beschichtungswalze (21A, 21B) beabstandet ist, dass die Zuführwalze (20A) an ihrer Mantelfläche eine elektrisch leitfähige Zuführwalzenschicht mit einer darauf befindlichen Isolierungsschicht aufweist, dass an die Zuführwalzenschicht derart ein elektrisches Potential der ersten Polarität angelegt wird, dass an der Mantelfläche der Zuführwalze (20A) befindliche Partikel elektrostatisch an diese angezogen werden, dass die Mantelfläche der Zuführwalze (20A) an einer vom Walzenspalt (24) beabstandeten Stelle mit den Pulverpartikeln in Kontakt gebracht und die Zuführwalze (20A) derart um ihre Achse gedreht wird, dass auf der Mantelfläche der Zuführwalze (20A) befindliche Pulverpartikeln in den Walzenspalt (24) gelangen, und dass das an die Zuführwalzenschicht angelegte Potential und das an die elektrisch leitfähige Schicht (43) der Beschichtungswalze (21A, 21B) angelegte Potential derart gewählt werden, dass die Pulverpartikel in dem Walzenspalt (24) von der Mantelfläche der Zuführwalze (20A) auf die Mantelfläche der Beschichtungswalze (21A, 21B) übertragen werden.

14. Verfahren nach einem der Ansprüche 9 bis 13, **dadurch gekennzeichnet, dass** magnetisch leitfähige Trägerpartikel bereitgestellt und derart mit den Pulverpartikeln des zweiten Materials (5) in Kontakt gebracht werden, dass die Pulverpartikel an den Trägerpartikeln lösbar haften bleiben, dass eine magnetische Zuführwalze für die Pulverpartikel bereitgestellt wird, die mit ihrer Mantelfläche durch einen Walzenspalt (24) von der Mantelfläche der Beschichtungswalze (21A, 21B) beabstandet ist, dass die magnetischen Trägerpartikel mit den daran anhaftenden Pulverpartikeln an einer vom Walzenspalt (24) beabstandeten Stelle derart mit der Mantelfläche der Zuführwalze (20B) in Kontakt gebracht werden, dass die Trägerpartikel magnetisch an der Mantelfläche der Zuführwalze (20B) haften bleiben, dass die Zuführwalze (20B) derart um ihre Achse gedreht wird, dass auf der Mantelfläche der Zuführwalze (20B) befindliche Trägerpartikel mit den daran anhaftenden Pulverpartikeln zunächst zum Abstreifen von mit Pulverpartikeln beschichteten Trägerpartikeln an einer Abstreifeinrichtung (37) vorbeibewegt werden und nach Durchlaufen der Abstreifeinrichtung (37) in den Walzenspalt (24) gelangen, und dass das Potential der Beschichtungswalze (21A, 21B) derart abweichend von dem Potential der an den Trägerpartikeln anhaftenden Pulverpartikel gewählt wird, dass die Pulverpartikel in dem Walzenspalt (24) von den Trägerpartikeln abgelöst und auf die Mantelfläche der Beschichtungswalze (21A, 21B) übertragen werden.

15. Verfahren nach einem der Ansprüche 9 bis 12, **dadurch gekennzeichnet, dass** magnetisch leitfähige Trägerpartikel bereitgestellt und derart mit den Pulverpartikeln des zweiten Materials (5) in Kontakt gebracht werden, dass die Pulverpartikel an den Trägerpartikeln lösbar haften bleiben, dass eine Beschichtungswalze (21B) mit einer magnetischen Mantelfläche bereitgestellt wird, die durch einen Übertragungsspalt (47) vom Boden der mit den Pulverpartikeln zu befüllenden Kavität (13) beabstandet ist, dass die magnetischen Trägerpartikel mit den daran anhaftenden Pulverpartikeln an einer von der Kavität (13) beabstandeten Stelle derart mit der Mantelfläche der Beschichtungswalze (21B) in Kontakt gebracht werden, dass die Trägerpartikel magnetisch an der Mantelfläche der Beschichtungswalze (21B) haften bleiben, dass die Beschichtungswalze (21B) derart um ihre Achse gedreht wird, dass auf der Mantelfläche der Beschichtungswalze (21B) befindliche Trägerpartikel mit den daran anhaftenden Pulverpartikeln zunächst zum Absteifen von mit Pulverpartikeln beschichteten Trägerpartikeln an einer Abstreifeinrichtung (37') vorbeibewegt werden und nach Durchlaufen der Abstreifeinrichtung (37') in den Übertragungsspalt (46) gelangen, und dass das Potential des Bodens der Kavität (13) derart abweichend von dem Potential der an den Trägerpartikeln anhaftenden Pulverpartikel gewählt wird, dass die Pulverpartikel in dem Übertragungsspalt von den Trägerpartikeln abgelöst und auf den Boden der Kavität (13) übertragen werden.

16. Verfahren nach einem der Ansprüche 1 bis 15, **dadurch gekennzeichnet, dass** als erstes Material ein vorzugsweise elektrisch leitfähiges Material und als zweites Material ein vorzugsweise elektrisch isolierendes Material verwendet wird, dass zumindest die am nächsten zur Trägeroberfläche des Partikelträgers angeordnete, verfestigte Negativform-Schicht (12) auf ein elektrisches Potential gelegt wird, das sich derart vom Potential des elektrisch leitfähigen Bereichs des Partikelträgers und vom elektrischen Potential der auf dem Partikelträger befindlichen Pulverpartikel des zweiten Materials unterscheidet, dass beim Positionieren dieser Negativform-Schicht an der Trägeroberfläche des Partikelträgers (12) weniger, insbesondere 50% weniger, gegebenenfalls 70% weniger und bevorzugt 90% weniger Pulverpartikel pro Flächeneinheit auf die Negativform-Schicht (12) übertragen werden als pro Flächeneinheit in mindestens eine Kavität (13) dieser Negativform-Schicht (12) übertragen werden, wenn die Kavität (13) an der Trägeroberfläche des Partikelträgers (12) positioniert wird.

17. Verfahren nach einem der Ansprüche 1 bis 16, **dadurch gekennzeichnet, dass** das pulverförmige zweite Material (5) einen Fotoinitiator umfasst, dass die thermoplastischen Pulverpartikel ein Polymer und/oder Copolymer aufweisen, und dass der Fotoinitiator nach dem Sintern zum Vernetzen des Polymers durch Bestrahlung mit elektromagnetischer Strahlung aktiviert wird.

18. Verfahren nach einem der Ansprüche 1 bis 17, **dadurch gekennzeichnet, dass** das Trägerteil (2) an der Basisfläche (3) mindestens zwei, in der Aufsicht auf die Basisfläche (3) seitlich zueinander versetzte, vorzugsweise kammartig ineinandergreifende Elektroden (47A, 47B) aufweist, und dass an die Elektroden (47A, 47B) derart eine elektrische Spannung angelegt wird, dass am Boden der Kavität (13) das die erste Polarität aufweisende elektrische Potential auftritt.

19. Verfahren nach Anspruch 18, **dadurch gekennzeichnet, dass** die an die Elektroden angelegte elektrische Spannung zwischen dem Auftragen der ersten und dem Auftragen der letzten Negativform-Schicht (12) mindestens einmal betragsmäßig erhöht wird.

20. Verfahren nach Anspruch 18 oder 19, **dadurch gekennzeichnet, dass** ein Messsignal für das elektrische Potential in der Höhe des Bodens der Kavität (13) erfasst und mit einem Sollwert oder einem Sollwertbereich verglichen wird, und dass beim Auftreten einer Abweichung zwischen dem Messsignal und dem Sollwert oder dem Sollwertbereich die elektrische Spannung an den Elektroden (47A, 47B) im Sinne einer Reduzierung der Abweichung verändert wird.

## Claims

1. A process for preparing a three-dimensional molded article (1) by means of a layerwise application of material, wherein geometric data for said molded article (1), a support part (2) having a base surface (3) for receiving the three-dimensional molded article (1), a solidifiable liquid, free-flowing or powdery first material (4), a powdery second material (5) comprising thermoplastic powder particles. and a solvent in which said solidified first material (4) is soluble are provided,
a) wherein, for forming a negative mold layer (12), material portions of said free-flowable, liquid or powdery first material (4) are applied to the base surface (3), and/or a solidified layer of material covering it, in accordance with the geometric data in such a manner that said negative mold layer (12) has at least one cavity (13) at its surface facing away from said base surface (3), which cavity has a negative shape of a layer of material to be prepared of said molded article (16),
b) wherein said negative mold layer (12) is solidified,
c) wherein at least the bottom of the cavity (13) formed by the base surface (3) or a solidified material layer located thereon is charged to an electrical potential of a first polarity,
d) wherein powder particles of the second material are charged to an electrical potential with a second polarity opposite to the first polarity and are applied flatly to a support surface of a particle support,
e) wherein the support surface with the powder particles located thereon faces the at least one cavity (13) and is positioned relative to the cavity (13) in such a way that the powder particles are transferred from the support surface into the cavity (13) and form therein a molded article layer (16) with a positive shape matching the negative mold,
f) wherein the thus obtained molded article layer (16) is sintered and solidified by the action of heat,
g) wherein regions of the solidified negative mold layer (12) and/or of the solidified molded article layer (16) that project over a plane provided at a predetermined distance to the base surface (3) are removed by material ablation in such a way that a planar surface is formed that extends over the negative mold layer (12) and the molded article layer (16),
h) wherein steps a) to g) are repeated at least once, and
i) wherein thereafter said negative mold layers (12) are contacted with the solvent in such a way that said solidified first material (4) dissolves in the solvent.

2. The process according to claim 1, **characterized in that** the material portions of the first material (4) are applied to the base surface and/or the solidified negative mold layer (12) covering it and/or a solidified molded article layer (16) by a material deposition printing method, preferably inkjet printing method, and said first material (4) is a material that can be solidified by exposure to energy, and is exposed to such energy for solidifying the negative mold layer (12).

3. The process according to claim 2, **characterized in that** said first material (4) has a working viscosity suitable for ink jet printing, which is lower than 1000 mPa·s, especially lower than 100 mPa·s, optionally lower than 30 mPa·s, and preferably lower than 20 mPa·s, and is applied to said base surface and/or the solidified layer of material covering it, of said three-dimensional molded article (1) in the form of liquid droplets with a resolution of at least 180 dpi, especially at least 360 dpi, and preferably at least 720 dpi or 1440 dpi.

4. The process according to any of claims 1 to 3, **characterized in that** in step g) of claim 1, the regions of the solidified negative mold layer (12) and/or the solidified molded object layer (16) projecting beyond the plane are removed by machining or particle-ablating material removal, especially by milling, grinding, lasering and cleaning and/or polishing.

5. The process according to any of claims 1 to 4, **characterized in that** the powder particles in step d) of claim 1 are charged triboelectrically.

6. The process according to any of claims 1 to 5, **characterized in that** the particle support has an electrically conductive layer (43) with an insulating layer (44) thereon, and that an electrical potential of the first polarity is applied to the electrically conductive layer (43) in such a way that particles located on the support surface are electrostatically attracted to it through the insulating layer (44).

7. The process according to any of claims 1 to 5, **characterized in that** the particle support has an electrically conductive layer with an active layer on top, the electrical conductivity of which can be changed by exposure to optical radiation, that the active layer is selectively structured by means of an electrophotography process with an electrical potential, that the active layer is then brought into contact with the powder particles of the second material in such a way that these adhere to the active layer with the electrical potential depending on the structuring of the active layer, and that the active layer thus structured with the powder particles is positioned on the cavity (13) in order to transfer the powder particles into the cavity (13).

8. The process according to any of claims 1 to 7, **characterized in that** the powder particles in step d) of claim 1 are charged by means of a triboelectric charging means (19), which has a reservoir (7) filled with the powder particles and a stirring tool (25) in contact with the powder particles, which is designed and moved relative to the powder particles in such a way that the latter become electrically charged.

9. The process according to any of claims 1 to 8, **characterized in that** a coating roller (21A, 21B) the lateral surface of which serves as a support surface for the powder particles is used as the particle support, that the lateral surface is brought into contact with the powder particles having the potential of the second polarity at a first location and the coating roller (21A, 21B) is rotated about the roller axis of the coating roller (21A, 21B) relative to the first location for the surface coating of the active lateral surface with the powder particles, and that the lateral surface is positioned at a second location coated with the powder particles, which is offset from the first location in the circumferential direction of the lateral surface, facing the cavity (13) and is positioned so close relative to the cavity (13) that the powder particles are transferred from the lateral surface into the cavity (13) to form the molded article layer (16).

10. The process according to claim 9, **characterized in that** powder particles adhering to a portion of the lateral surface of the coating roller (21A, 21B) which lies behind the second location and in front of the first location in the direction of rotation are removed from the lateral surface and transported back into the reservoir (7).

11. The process according to claim 9 or 10, **characterized in that** a cylindrical roller is used as said coating roller (21B), that the support part (2) having the base surface (3)
i) for applying a first layer of material, is displaced in a forward transport direction relative to the coating roller (21B) starting from a starting position,
ii) thereafter moved back into the starting position relative to the coating roller (21B),
iii) then is again displaced relative to the coating roller (21B) in the forward transport direction to apply a second layer of material,
and that the support part (2) is lowered relative to the coating roller (21B) during and/or between steps i) to iii).

12. The process according to claim 9 or 10, **characterized in that** the support part (2) having the base surface (3) is rotated relative to the coating roller (21A) about a rotation axis (11) arranged transversely to the cylinder axis of the coating roller (21A) during the material application and optionally during the solidification of the materials (4, 5), and is optionally lowered relative to the coating roller (21A) during the rotational movement, and that the coating roller (21A) is designed as a conical roller, whose roller cross-section decreases from its end remote from the rotation axis (11) to its other end closer to the rotation axis (11).

13. The process according to any of claims 9 to 12, **characterized in that** a feed roller (20A) for the powder particles is provided, which is spaced with its lateral surface by a roller gap (24) from the lateral surface of the coating roller (21A, 21B), that the feed roller (20A) has on its lateral surface an electrically conductive feed roller layer with an insulating layer thereon, that an electrical potential of the first polarity is applied to the electrically conductive layer in such a way that particles located on the lateral surface of the feed roller (20A) are electrostatically attracted to it, that the lateral surface of the feed roller (20A) is brought into contact with the powder particles at a point spaced from the roller gap (24) and the feed roller (20A) is rotated about its axis in such a way that powder particles located on the lateral surface of the feed roller (20A) arrive in the roller gap (24), and that the potential applied to the feed roller layer and the potential applied to the electrically conductive layer (43) of the coating roller (21A, 21B) are selected such that the powder particles in the roller gap (24) are transferred from the lateral surface of the feed roller (20A) to the lateral surface of the coating roller (21A, 21B).

14. The process according to any of claims 9 to 13, **characterized in that** magnetically conductive support particles are provided and thus brought into contact with the powder particles of the second material (5), that the powder particles adhere releasably to the support particles, that a magnetic feed roller for the powder particles is provided which is spaced with its lateral surface by a roller gap (24) from the lateral surface of the coating roller (21A, 21B), that the magnetic support particles with the powder particles adhering thereto are brought into contact with the lateral surface of the feed roller (20B) at a location spaced from the roller gap (24), that the support particles adhere magnetically to the surface of the feed roller (20B), that the feed roller (20B) is rotated about its axis in such a way that support particles located on the lateral surface of the feed roller (20B) with the powder particles adhering thereto are first moved past a stripping device (37) for stripping off support particles coated with powder particles, and after passing through the stripping device (37), arrive in the roller gap (24), and that the potential of the coating roller (21A, 21B) is selected to deviate from the potential of the powder particles adhering to the support particles in such a way that the powder particles in the roller gap (24) are detached from the support particles and transferred to the lateral surface of the coating roller (21A, 21B).

15. The process according to any of claims 9 to 12, **characterized in that** magnetically conductive support particles are provided and thus brought into contact with the powder particles of the second material (5), that the powder particles adhere releasably to the support particles, that a coating roller (21B) with a magnetic lateral surface is provided, which is spaced from the bottom of the cavity (13) to be filled with the powder particles by a transfer gap (47), that the magnetic support particles with the powder particles adhering thereto are brought into contact with the lateral surface of the coating roller (21B) at a location spaced from the cavity (13), that the support particles adhere magnetically to the lateral surface of the coating roller (21B), that the coating roller (21B) is rotated about its axis in such a way that support particles located on the lateral surface of the coating roller (21B) with the powder particles adhering thereto are first moved past a stripping device (37) for stripping off support particles coated with powder particles, and after passing through the stripping device (37), arrive in the transfer gap (46), and that the potential of the bottom of the cavity (13) is selected to deviate from the potential of the powder particles adhering to the support particles in such a way that the powder particles in said transfer gap are detached from the support particles and transferred to the bottom of the cavity (13).

16. The process according to any of claims 1 to 15, **characterized in that** a preferably electrically conductive material is used as the first material and a preferably electrically insulating material is used as the second material, that at least the solidified negative mold layer (12) arranged closest to the support surface of the particle support is placed at an electrical potential that differs from the potential of the electrically conductive region of the particle support and from the electrical potential of the powder particles of the second material located on the particle support in such a way that when positioning this negative mold layer on the support surface of the particle support (12), fewer, in particular 50% fewer, optionally 70% fewer and preferably 90% fewer powder particles per unit area are transferred to the negative mold layer (12) than are transferred per unit area into at least one cavity (13) of this negative mold layer (12), when the cavity (13) is positioned on the support surface of the particle support (12).

17. The process according to any of claims 1 to 16, **characterized in that** the powdery second material (5) comprises a photoinitiator, that the thermoplastic powder particles comprise a polymer and/or copolymer, and that the photoinitiator is activated after sintering to crosslink the polymer by irradiation with electromagnetic radiation.

18. The process according to any of claims 1 to 17, **characterized in that** the support part (2) has at least two electrodes (47A, 47B) on the base surface (3) which are laterally offset from one another in the plan view of the base surface (3), preferably intermeshing in a comb-like manner, and that an electrical voltage is applied to the electrodes (47A, 47B) in such a way that the electrical potential having the first polarity occurs at the bottom of the cavity (13).

19. The process according to claim 18, **characterized in that** the electrical voltage applied to the electrodes is increased in magnitude at least once between the application of the first and the application of the last negative mold layer (12).

20. The process according to claim 18 or 19, **characterized in that** a measuring signal for the electrical potential at the level of the bottom of the cavity (13) is acquired and compared with a target value or a target value range, and that if a deviation occurs between the measurement signal and the target value or the target range, the electrical voltage at the electrodes (47A, 47B) is changed to reduce the deviation.

## Revendications

1. Procédé pour préparer une pièce moulue tridimensionnelle (1) par application de matériau couche par couche, dans lequel des données géométriques pour la pièce moulue (1), un élément de support (2) ayant une surface de base (3) pour recevoir ladite pièce moulue tridimensionnelle (1), un premier matériau fluide ou poudreux, solidifiable (4), un deuxième matériau poudreux comprenant des particules de poudre thermoplastiques (5), et un solvant dans lequel ledit premier matériau solidifiable (4) est soluble sont procurés, dans lequel ledit premier matériau (4) solidifié est soluble dans ledit solvant,
a) dans lequel, pour former une couche de moulage négative (12), des parties de matériau du premier matériau fluide, liquide ou poudreux (4) sont appliquées sur la surface de base (3) et/ou une couche de matériau solidifiée située dessus conformément aux données géométriques de manière que ladite couche de forme négative (12) présente au moins une cavité (13) dans sa surface à l'opposé de la surface de base (3), qui présente une forme négative d'une couche d'objet moulé (16) à fabriquer,
b) dans lequel ladite couche de forme négative (12) est solidifiée,
c) dans lequel au moins le fond de la cavité (13) formé par la surface de base (3) ou une couche de matériau solidifié située sur celle-ci est chargé à un potentiel électrique d'une première polarité,
d) dans lequel les particules de poudre du deuxième matériau sont chargées à un potentiel électrique avec une deuxième polarité opposée à la première polarité et appliquées à plat sur une surface porteuse d'un support de particules,
e) dans lequel la surface de support sur laquelle se trouvent les particules de poudre fait face à au moins une cavité (13) et est positionnée par rapport à la cavité (13) de manière que les particules de poudre soient transférées de la surface de support dans la cavité (13) et forment une couche d'objet moulé (16) avec un moule positif qui correspond au moule négatif,
f) dans lequel la couche d'objet moulé (16) ainsi obtenue est frittée et solidifiée par l'action de la chaleur,
g) dans lequel des zones de ladite couche de forme négative (12) solidifiée et/ou de ladite couche de la pièce moulée (16) solidifiée saillant sur un plan situé à une distance prédéterminée de la surface de base (3) sont enlevés par enlèvement de matière de telle manière qu'une surface plane qui s'étend sur la couche de moulage négative (12) et la couche d'objet moulé (16) soit produite,
h) dans lequel les étapes a) à g) sont répétées au moins une fois, et
i) dans lequel les couches du moule négatif (12) sont ensuite mises en contact avec le solvant de telle manière que ledit premier matériau (4) solidifié soit dissout dans ledit solvant.

2. Procédé selon la revendication 1, **caractérisé en ce que** les portions de matériau du premier matériau (4) sont appliquées au moyen d'un procédé d'impression par dépôt de matériau, de préférence au moyen d'un procédé d'impression à jet d'encre, à la surface de base et/ou au-dessus, à la couche de forme négative (12) solidifiée et/ou une couche de pièce moulue (16) solidifiée, et le premier matériau (4) est un matériau solidifiable par l'action d'énergie, qui est exposé à de l'énergie pour solidifier la couche de forme négative (12).

3. Procédé selon la revendication 2, **caractérisé en ce que** ledit premier matériau (4) présente une viscosité de fonctionnement adaptée pour un l'impression à jet d'encre, qui est inférieure à 1000 mPa·s, notamment inférieure à 100 mPa·s, éventuellement inférieure à 30 mPa·s, et de préférence inférieure à 20 mPa·s, et est appliqué à la surface de base et/ou, au-dessus, la couche de matériau solidifiée de ladite pièce moulue tridimensionnelle (1) sous la forme de gouttelettes de liquide avec une résolution d'au moins 180 dpi, notamment d'au moins 360 dpi, et de préférence d'au moins 1440 dpi.

4. Procédé selon l'une quelconque des revendications 1 à 3, **caractérisé en ce que** à l'étape g) selon la revendication 1, les zones de la couche de moulage négative solidifiée (12) et/ou de la couche d'objet moulé solidifiée (16) qui dépassent au-dessus du plan sont éliminées par élimination de matériaux par écaillage ou par élimination de particules, notamment par fraisage, meulage, laser et nettoyage et/ou polissage.

5. Procédé selon l'une quelconque des revendications 1 à 4, **caractérisé en ce que** les particules de poudre sont chargées triboélectriquement à l'étape d) de la revendication 1.

6. Procédé selon l'une quelconque des revendications 1 à 5, **caractérisé en ce que** le support de particules comporte une couche électriquement conductrice (43) sur laquelle est recouverte une couche isolante (44), et qu'un potentiel électrique de première polarité est appliqué à la couche électriquement conductrice (43) de manière que les particules situées sur la surface du support soient attirées électrostatiquement vers celle-ci à travers la couche isolante (44).

7. Procédé selon l'une quelconque des revendications 1 à 5, **caractérisé en ce que** le support de particules présente une couche électriquement conductrice sur laquelle se trouve une couche active dont la conductivité électrique peut être modifiée par exposition à un rayonnement optique, que la couche active est structurée sélectivement à l'aide d'un procédé d'électrophotographie à un potentiel électrique, que la couche active est ensuite mise en contact avec les particules de poudre du deuxième matériau de manière à ce qu'elles adhèrent à la couche active avec le potentiel électrique dépendant de la structuration de la couche active, et que la couche active structurée avec les particules de poudre est positionnée sur la cavité (13) afin de transférer les particules de poudre dans la cavité (13).

8. Procédé selon l'une quelconque des revendications 1 à 7, **caractérisé en ce que** les particules de poudre sont chargées en utilisant un dispositif de chargement triboélectrique à l'étape d) de la revendication 1, qui présente un réservoir (7) rempli des particules de poudre et un outil d'agitation (25) en contact avec les particules de poudre, qui est conçu et déplacé par rapport aux particules de poudre de telle manière qu'elles soient chargées électriquement.

9. Procédé selon l'une quelconque des revendications 1 à 8, **caractérisé en ce que** comme support de particules, on utilise un rouleau de revêtement (21A, 21B), dont la surface latérale sert de surface de support pour les particules de poudre, que la surface latérale est mise en contact en un premier point avec les particules de poudre ayant le potentiel de la deuxième polarité, et le rouleau de revêtement (21A, 21B) tourne autour de l'axe du rouleau de revêtement (21A, 21B) par rapport au premier point pour le revêtement de la surface latérale active avec les particules de poudre, et que la surface latérale fait face à la cavité (13) en un deuxième point recouvert des particules de poudre, qui est décalé par rapport au premier point dans la direction circonférentielle de la surface latérale, et est positionné si près de la cavité (13) les particules de poudre sont transférées de la surface latérale dans la cavité (13) pour former la couche d'objet moulé (16).

10. Procédé selon la revendication 9, **caractérisé en ce que** des particules de poudre qui adhèrent à une section de la surface latérale du rouleau de revêtement (21A, 21B), située derrière le deuxième point et devant le premier point dans le sens de rotation, sont retirées de la surface latérale et ramenées dans le réservoir (7).

11. Procédé selon la revendication 9 ou 10, caractérisé en ce un rouleau cylindrique est utilisé comme rouleau de revêtement (21B), que la pièce de support (2) présentant la surface de base (3)
i) pour appliquer une première couche de matériau, est déplacée à partir d'une position de départ dans une direction de transport vers l'avant par rapport au rouleau de revêtement (21B),
ii) puis ramené en position de départ par rapport au rouleau de revêtement (21B),
iii) puis pour appliquer une deuxième couche de matériau, est à nouveau déplacée par rapport au rouleau de revêtement (21B) dans le sens de transport vers l'avant,
et que la pièce de support (2) est abaissée par rapport au rouleau de revêtement (21B) pendant et/ou entre les étapes i) à iii).

12. Procédé selon la revendication 9 ou 10, caractérisé en ce la pièce de support (2) présentant la surface de base (3) tourne par rapport au rouleau de revêtement (21A) pendant l'application du matériau et, le cas échéant, pendant la solidification des matériaux (4, 5) autour d'un axe de rotation (11) disposé transversalement à l'axe du cylindre du rouleau de revêtement (21A), et éventuellement abaissée par rapport au rouleau de revêtement (21A) pendant le mouvement de rotation, et que le rouleau de revêtement (21A) est réalisé sous forme de rouleau conique, dont la section transversale du rouleau diminue depuis son extrémité éloignée de l'axe de rotation (11) jusqu'à son autre extrémité disposée plus près de l'axe de rotation (11).

13. Procédé selon l'une quelconque des revendications 9 à 12, **caractérisé en ce que** pour les particules de poudre, il est prévu un rouleau d'alimentation (20A), dont la surface latérale est espacée de la surface latérale du rouleau de revêtement (21A, 21B) par un espace entre les rouleaux (24), que le rouleau d'alimentation (20A) présente sur sa surface latérale une couche de rouleau d'alimentation électriquement conductrice avec une couche isolante dessus, qu'un potentiel électrique de première polarité est appliqué à la couche du rouleau d'alimentation de telle sorte que les particules situées sur la surface latérale du rouleau d'alimentation (20A) soient attirées électrostatiquement vers celle-ci, que la surface latérale du rouleau d'alimentation (20A) est mise en contact avec les particules de poudre en un point espacé de l'espace entre les rouleaux (24), et le rouleau d'alimentation (20A) est tourné autour de son axe de telle manière que les particules de poudre situées sur la surface latérale du rouleau d'alimentation (20A) atteignent l'espace entre les rouleaux (24), et que le potentiel appliqué à la couche du rouleau d'alimentation et le potentiel appliqué à la couche électriquement conductrice (43) du rouleau de revêtement (21A, 21B) sont sélectionnés de telle manière que les particules de poudre dans l'espace entre les rouleaux (24) soient transférées de la surface latérale du rouleau d'alimentation (20A) à la surface latérale du rouleau de revêtement (21A, 21B).

14. Procédé selon l'une quelconque des revendications 9 à 13, **caractérisé en ce que** des particules porteuses magnétiquement conductrices sont prévues et mises en contact avec les particules de poudre du deuxième matériau (5) de manière que les particules de poudre restent collées de manière amovible aux particules porteuses, qu'il est prévu pour les particules de poudre un rouleau d'alimentation magnétique dont la surface latérale est espacée de la surface latérale du rouleau de revêtement (21A, 21B) par un espace entre les rouleaux (24), que les particules porteuses magnétiques avec les particules de poudre qui y adhèrent sont amenées en contact avec la surface latérale du rouleau d'alimentation (20B) en un point éloigné de l'espace entre les rouleaux (24), que les particules porteuses adhèrent magnétiquement à la surface latérale du rouleau d'alimentation (20B), que le rouleau d'alimentation (20B) est tourné autour de son axe de telle manière que les particules porteuses situées sur la surface latérale du rouleau d'alimentation (20B), sur lesquelles adhèrent les particules de poudre, soient d'abord déplacées devant un dispositif d'enlèvement (37) afin d'enlever les particules porteuses recouvertes de particules de poudre, et après avoir traversé le dispositif d'enlèvement (37), atteindre l'espace entre les rouleaux (24), et que le potentiel du rouleau de revêtement (21A, 21B) est choisi de manière à être très différent du potentiel des particules de poudre adhérant aux particules porteuses, que les particules de poudre dans l'espace entre les rouleaux (24) soient libérées des particules porteuses et transférées à la surface latérale du rouleau de revêtement (21A, 21B).

15. Procédé selon l'une quelconque des revendications 9 à 12, **caractérisé en ce que** des particules porteuses magnétiquement conductrices sont prévues et mises en contact avec les particules de poudre du deuxième matériau (5) de manière que les particules de poudre restent collées de manière amovible aux particules porteuses, qu'il est prévu un rouleau de revêtement (21B) avec une surface latérale magnétique, qui est espacé du fond de la cavité (13) à remplir avec les particules de poudre par un espace de transfert (47), que les particules porteuses magnétiques avec les particules de poudre qui y adhèrent sont mises en contact avec la surface latérale du rouleau de revêtement (21B) en un point espacé de la cavité (13) de quelle manière que les particules porteuses adhèrent magnétiquement à la surface latérale du rouleau de revêtement (21B), que le rouleau de revêtement (21B) est tourné autour de son axe de telle manière que les particules porteuses situées sur la surface latérale du rouleau de revêtement (21B), sur lesquelles adhèrent les particules de poudre, soient d'abord déplacées devant un dispositif d'enlèvement (37) afin d'enlever les particules porteuses recouvertes de particules de poudre, et après avoir traversé le dispositif d'enlèvement (37), atteindre l'espace de transfert (46), et que le potentiel du fond de la cavité (13) est choisi si différent du potentiel des particules de poudre adhérant aux particules porteuses que les particules de poudre soient détachées des particules porteuses dans l'espace de transfert et transférées au fond de la cavité (13).

16. Procédé selon l'une quelconque des revendications 1 à 15, **caractérisé en ce que** comme premier matériau, on utilise un matériau de préférence électriquement conducteur et comme deuxième matériau, un matériau de préférence électriquement isolant, qu'au moins la couche de moulage négative solidifiée (12), disposée le plus près de la surface porteuse du support de particules, est placée à un potentiel électrique qui se distingue ainsi du potentiel de la zone électriquement conductrice du support de particules et du potentiel électrique des particules de poudre du deuxième matériau situées sur le support de particules que, lors du positionnement de cette couche de moulage négative sur la surface porteuse du support de particules (12), moins de particules de poudre, en particulier 50 % de moins, éventuellement 70 % de moins et de préférence 90 % de moins par unité de surface, sont transférées vers la couche de moulage négative (12) que celles transférées par unité de surface dans au moins une cavité (13) de cette couche de moulage négative (12), lorsque la cavité (13) est positionnée sur la surface porteuse du support de particules (12).

17. Procédé selon l'une quelconque des revendications 1 à 16, **caractérisé en ce que** le deuxième matériau pulvérulent (5) comprend un photoinitiateur, que les particules de poudre thermoplastiques contiennent un polymère et/ou un copolymère, et que le photoinitiateur est activé après frittage pour réticuler le polymère par irradiation par un rayonnement électromagnétique.

18. Procédé selon l'une quelconque des revendications 1 à 17, **caractérisé en ce que** la partie de support (2) présente sur la surface de base (3) au moins deux électrodes (47A, 47B), qui sont décalées latéralement l'une par rapport à l'autre lorsqu'on regarde du dessus de la surface de base (3) et s'emboîtent de préférence comme un peigne, et qu'une tension électrique est appliquée aux électrodes (47A, 47B) de manière que le potentiel électrique ayant la première polarité apparaît au fond de la cavité (13).

19. Procédé selon la revendication 18, **caractérisé en ce que** la tension électrique appliquée aux électrodes est augmentée au moins une fois entre l'application de la première et dernière couches de moule négatif (12).

20. Procédé selon la revendication 18 ou 19, **caractérisé en ce qu'**un signal de mesure du potentiel électrique est enregistré à la hauteur du fond de la cavité (13) et comparé à une valeur cible ou à une plage de valeurs cibles, et que, si un écart se produit entre le signal de mesure et la valeur cible ou la plage de valeurs cibles, la tension électrique sur les électrodes (47A, 47B) est modifiée dans le sens de réduire l'écart.
